(19) Europäisches Patentamt
European Patent Office
Office européen des brevets

(11) **EP 4 303 633 B1**

(12) **FASCICULE DE BREVET EUROPEEN**

(45) Date de publication et mention
de la délivrance du brevet:
**19.02.2025 Bulletin 2025/08**

(21) Numéro de dépôt: **23183001.9**

(22) Date de dépôt: **03.07.2023**

(51) Classification Internationale des Brevets (IPC):
**G02B 5/20** (2006.01)     **G02B 5/28** (2006.01)

(52) Classification Coopérative des Brevets (CPC):
**G02B 5/201; G02B 5/288**

(54) **MATRICE DE FILTRAGE MULTISPECTRAL À FILTRES DE FABRY-PÉROT INCURVÉS ET PROCÉDÉS DE FABRICATION**

MULTISPEKTRALE FILTERMATRIX MIT GEKRÜMMTEN FABRY-PEROT-FILTERN UND VERFAHREN ZUR HERSTELLUNG

MULTISPECTRAL FILTER ARRAY WITH CURVED FABRY-PEROT FILTERS AND METHODS OF MAKING

(84) Etats contractants désignés:
**AL AT BE BG CH CY CZ DE DK EE ES FI FR GB GR HR HU IE IS IT LI LT LU LV MC ME MK MT NL NO PL PT RO RS SE SI SK SM TR**

(30) Priorité: **04.07.2022 FR 2206767**

(43) Date de publication de la demande:
**10.01.2024 Bulletin 2024/02**

(73) Titulaire: **Commissariat à l'Energie Atomique et aux Energies Alternatives**
**75015 Paris (FR)**

(72) Inventeurs:
• **PALANCHOKE, Ujwol**
**38054 Grenoble Cédex 09 (FR)**
• **BERARD-BERGERY, Sébastien**
**38054 Grenoble Cédex 09 (FR)**
• **LANDIS, Stefan**
**38054 Grenoble Cédex 09 (FR)**

(74) Mandataire: **Cabinet Camus Lebkiri**
**25 rue de Maubeuge**
**75009 Paris (FR)**

(56) Documents cités:
US-A- 4 466 699     US-A1- 2011 043 823
US-A1- 2012 182 619     US-A1- 2014 217 625

**Description**

**DOMAINE TECHNIQUE DE L'INVENTION**

Le domaine technique de l'invention est celui du filtrage spectral, notamment pour des applications d'imagerie et la réalisation de filtres de couleurs, filtres infrarouges ou d'autres filtres de longueurs d'onde plus importantes selon le métal et le matériau de la cavité appropriés, pour des capteurs d'images de type CMOS, les dispositifs d'affichage à cristaux liquides ou des diodes électroluminescentes. L'invention peut également être mise en en œuvre dans des dispositifs d'émission de la lumière.

La présente invention concerne une matrice de filtrage multispectral et des procédés de fabrications d'une telle matrice.

**ARRIERE-PLAN TECHNOLOGIQUE DE L'INVENTION**

Un filtre spectral ou encore un filtre de couleur permet de filtrer la lumière par longueur d'onde, de façon à fournir une information sur l'intensité de la lumière dans certaines longueurs d'onde. Plusieurs filtres de couleur peuvent être associés de façon à former, par exemple, des filtres rouge-vert-bleu (RGB dans la terminologie anglaise) qui renseignent sur l'intensité de ces trois couleurs.

On connait notamment des filtres de couleur de type métal/diélectrique réalisés à partir d'une cavité de Fabry-Pérot. Ces filtres comprennent une ou plusieurs cavités diélectriques (ou éventuellement semiconductrices) formées entre deux films minces de métal ayant une fonction de miroir métallique de façon à former une cavité de Fabry-Pérot. Un exemple de ce type de filtre est décrit dans le document US6031653. Généralement, les empilements métal/diélectrique sont différents suivant la position sur le composant optoélectronique (un capteur d'image par exemple). La transmission du filtre est réglée en ajustant l'épaisseur de la cavité. Ainsi, en fonctionnement, une partie de la lumière incidente correspondant à la longueur d'onde du filtre est transmise à travers celui-ci sous la forme d'un faisceau coloré, tandis que le reste de la lumière incidente est réfléchie. De façon générale, l'épaisseur de la couche diélectrique fixe la longueur d'onde centrale transmise, tandis que l'épaisseur des couches métalliques permet de régler la largeur spectrale de transmission. Par ailleurs, l'utilisation de plusieurs cavités de Fabry-Pérot permet de modifier le profil spectral de la transmission du filtre. Un filtre de ce type est réalisé en utilisant des techniques classiques de fabrication de semi-conducteurs. Ainsi, pour obtenir un filtre rouge-vert-bleu, il convient de former au moins une cavité diélectrique dont l'épaisseur doit présenter trois valeurs différentes.

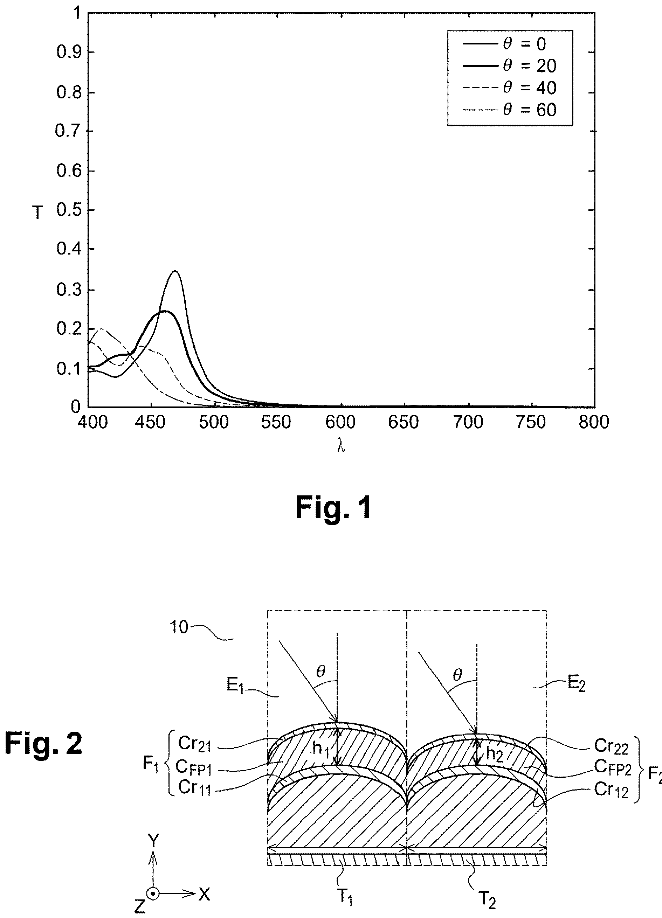

Cependant, même si la sélectivité en longueur d'onde peut être obtenue en modifiant l'épaisseur de la cavité, un filtre de cavité de Fabry-Pérot est également très sensible à l'angle d'incidence. La [Fig. 1] présente la réponse spectrale d'un filtre de couleur à une onde électromagnétique, pour une épaisseur de couche de diélectrique fixe et différents angles d'incidence de l'onde électromagnétique.

De nombreuses études ont été menées pour remédier à ce défaut de sensibilité des filtres à l'angle d'incidence des ondes électromagnétiques. Une façon de réduire la sensibilité, décrite dans l'article suivant : « Non-iridescent Transmissive Structural Color Filter Featuring Highly Efficient Transmission and High Excitation Purity. Sci Rep 4, 4921 (2014) », Shrestha, V., Lee, SS., Kim, ES. et al., est d'utiliser des cavités multiples avec un matériau de cavité à indice plus élevé. Les auteurs de l'article ont utilisé le fait que le décalage fractionnel de longueur d'onde dépendant de l'angle est

$$\frac{\frac{\partial \lambda_0}{\lambda_0}}{\partial \theta} \propto \frac{\cos\theta \sin\theta}{n^2 - (\sin\theta)^2}$$

déterminé par l'indice de réfraction de la cavité : , où $\theta$ est l'angle d'incidence de l'onde électromagnétique et n est l'indice de réfraction de la cavité. Les solutions proposées réduisent la sensibilité à l'angle, mais elles nécessitent plusieurs étapes de lithographie et de gravure pour leur fabrication.

Une autre manière de réduire la sensibilité angulaire est proposée dans le document US4466699A qui décrit un filtre Fabry-Pérot avec deux plaques de surfaces courbes ou, plus particulièrement, des surfaces asphériques qui sont mobiles les unes par rapport aux autres le long d'un axe. Les surfaces courbes permettent d'avoir un angle d'incidence du rayonnement qui n'est pas perpendiculaire à la surface en tout point de la surface. La courbure des plaques est choisie de telle sorte que l'erreur introduite par le fait que l'angle d'incidence n'est pas perpendiculaire est compensée par la différence de distance entre les plaques, pour obtenir la longueur d'onde souhaitée en sortie du filtre.

Cependant, le filtre Fabry-Pérot proposé dans le document US4466699A permet de varier l'écart entre les plaques pour obtenir une longueur d'onde à la fois et non plusieurs longueurs d'ondes à la fois. De plus, le filtre ayant une distance variable entre les plaques, celui-ci ne peut pas être utilisé en imagerie, et en particulier à des dimensions de la micro-électronique avec des capteurs d'image CMOS, à cause des contraintes de fabrication. US 2011/0043823 A1 décrit un autre exemple de matrice de filtrage multispectral de l'art antérieur.

## RESUME DE L'INVENTION

L'invention offre une solution aux problèmes évoqués précédemment, en proposant une matrice comprenant des filtres de Fabry-Pérot permettant d'obtenir plusieurs longueurs d'ondes, peu sensible à la variation de l'angle d'incidence d'une radiation électromagnétique et utilisable en technologie CMOS.

Un aspect de l'invention concerne une matrice de filtrage multispectral pour une onde électromagnétique, la matrice comportant au moins un premier et un deuxième éléments optoélectroniques, chaque élément optoélectronique comprenant un filtre de couleur et un transducteur photoélectrique en regard dudit filtre, chaque filtre de couleur formant une cavité Fabry-Pérot comportant une première couche réfléchissante, une deuxième couche réfléchissante et une couche en matériau diélectrique de cavité de Fabry-Pérot entre la première couche réfléchissante et la deuxième couche réfléchissante, la couche de matériau diélectrique comportant :

- une surface inférieure, au contact de la première couche réfléchissante, la surface inférieure étant courbe;
- Une surface supérieure au contact de la deuxième couche réfléchissante, la surface supérieure étant courbe;

les épaisseurs des deux couches en matériau diélectrique des deux filtres de couleur étant différentes.

Grâce à l'invention, la transmission des filtres de couleurs est indépendante de l'angle d'incidence d'une onde électromagnétique incidente, ce qui permet d'obtenir une longueur d'onde souhaitée pour chaque filtre uniquement en faisant varier les épaisseurs des couches de diélectrique sans se soucier des angles d'incidence. De plus, la matrice comprend des filtres de cavités de Fabry-Pérot utilisés pour l'imagerie en microélectronique, et en particulier dans des technologies CMOS.

Outre les caractéristiques qui viennent d'être évoquées dans le paragraphe précédent, la matrice selon un premier aspect de l'invention peut présenter une ou plusieurs caractéristiques complémentaires parmi les suivantes, considérées individuellement ou selon toutes les combinaisons techniquement possibles :

- pour chaque filtre de couleur :

    - la première couche réfléchissante présente une surface inférieure courbe et une surface supérieure courbe de même rayon de courbure, la surface supérieure de la première couche réfléchissante étant au contact de la surface inférieure de la couche en matériau diélectrique;
    - La deuxième couche réfléchissante présente une surface inférieure courbe et une surface supérieure courbe de même rayon de courbure, la surface inférieure de la deuxième couche réfléchissante étant au contact de la surface supérieure de la couche en matériau diélectrique.

- les rayons de courbure de la surface inférieure et de la surface supérieure de la couche de matériau diélectrique de chaque filtre de couleur sont strictement supérieurs à 300 nm.
- pour chaque filtre de couleur, les courbures de la surface inférieure et de la surface supérieure de la couche de matériau diélectrique de chaque filtre de couleur sont toutes les deux convexes ou toutes les deux concaves.
- le profil courbe de la surface inférieure de la couche en matériau diélectrique d'au moins un filtre de couleur parmi le premier et le deuxième filtres de couleur est défini par l'équation suivante :

$$y = R_y * \left( 1 - \left| \frac{x}{f * Sx} \right|^m \right)^{\frac{1}{n}} + \mathrm{h_{Cri1}}$$

et le profil courbe de la surface supérieure de ladite couche est défini par l'équation suivante :

$$y = R_y * \left( 1 - \left| \frac{x}{f * Sx} \right|^m \right)^{\frac{1}{n}} + \mathrm{hi} + \mathrm{h_{Cri1}}$$

dans un repère (O,X,Y,Z) de l'espace, O étant l'origine de la surface inférieure de la première couche réfléchissante;
Avec:

- hi l'épaisseur de la couche en matériau diélectrique dudit filtre,
- $\mathrm{h_{Cri1}}$ l'épaisseur, selon l'axe Y, de la première couche réfléchissante du filtre,
- Ry le rayon de courbure de la surface inférieure et de la surface supérieure de la couche en matériau diélectrique selon l'axe Y pour x=0,

- m et n respectivement un entier naturel et un entier naturel non nul,
- Avec f*Sx le rayon de courbure de la surface inférieure et de la surface supérieure de la couche en matériau diélectrique selon l'axe X, Sx étant la taille, selon l'axe X, du transducteur photoélectrique en regard du filtre et f une constante;

- le profil courbe de la surface inférieure de la couche en matériau diélectrique d'au moins un filtre de couleur parmi le premier et le deuxième filtres de couleur est défini par l'équation suivante :

$$z = R_z * \left(1 - \left|\frac{x}{f*Sx}\right|^m - \left|\frac{y}{f*Sy}\right|^n\right)^{\frac{1}{k}} + h_{Cri1}$$

Et le profil courbe de la surface supérieure de ladite couche en matériau diélectrique du filtre de couleur est défini par l'équation suivante :

$$z = R_z * \left(1 - \left|\frac{x}{f*Sx}\right|^m - \left|\frac{y}{f*Sy}\right|^n\right)^{\frac{1}{k}} + h_i + h_{Cri1}$$

Dans un repère (O,X,Y,Z) de l'espace, O étant l'origine de la surface inférieure de la première couche réfléchissante du filtre,
Avec:

- $h_i$ l'épaisseur de la couche en matériau diélectrique dudit filtre,

- $h_{Cri1}$ l'épaisseur, selon l'axe Y, de la première couche réfléchissante du filtre,

- $R_Z$ le rayon de courbure de la surface inférieure et de la surface supérieure de la couche en matériau diélectrique selon l'axe Z,

- m et n respectivement un entier naturel et un entier naturel non nul,

- Avec f*Sx le rayon de courbure de la surface inférieure et de la surface supérieure de la couche en matériau diélectrique selon l'axe X, Sx étant la taille, selon l'axe X, du transducteur photoélectrique en regard du filtre et f une constante,

- Avec f*Sy le rayon de courbure de la surface inférieure et de la surface supérieure de la couche en matériau diélectrique selon l'axe Y, Sy étant la taille, selon l'axe Y, du transducteur photoélectrique en regard du filtre.

- pour chaque filtre de couleur, lorsque les courbures de la surface inférieure et de la surface supérieure de la couche de matériau diélectrique sont toutes les deux convexes, la courbure de la surface supérieure et de la surface inférieure de la couche en matériau diélectrique est choisie de manière à focaliser l'onde électromagnétique sur le transducteur en regard dudit filtre . Cette caractéristique permet éventuellement de s'affranchir d'une microlentille, qui est habituellement utilisée en imagerie pour focaliser les ondes électromagnétiques reçues par un filtre vers le transducteur.

Un deuxième aspect de l'invention concerne un procédé de fabrication d'une matrice de filtrage multispectral selon l'invention dans lequel l'épaisseur de la couche en matériau diélectrique du premier filtre de couleur est inférieure à l'épaisseur de la couche en matériau diélectrique du deuxième filtre de couleur et la réalisation du premier et du deuxième filtres de couleur comporte les étapes suivantes:

- Dépôt sur un substrat porteur d'une couche de résine ;

- Structuration de la couche de résine, pour obtenir un premier motif de résine définissant une première zone de motif et un deuxième motif de résine définissant une deuxième zone de motif, chaque motif de résine ayant une surface supérieure courbe, les première et deuxième zones de motif définissant une zone globale de motifs;

- Dépôt conforme d'une première couche réfléchissante sur la zone globale de motifs, formant les premières couches réfléchissantes du premier et deuxième filtres de couleurs ;

- Dépôt conforme d'une première couche en matériau diélectrique sur la zone globale de motifs, la première couche en matériau diélectrique ayant une épaisseur égale à l'épaisseur de la couche en matériau diélectrique de cavité de Fabry-Pérot du premier filtre ;

- Dépôt d'une couche de résine photosensible sur la zone globale de motifs ;

- Elimination, par photolithographie, de la partie de la couche de résine photosensible recouvrant la deuxième zone de motif,

- Dépôt conforme d'une deuxième couche en matériau diélectrique sur la deuxième zone de motif, l'épaisseur totale de la deuxième couche en matériau diélectrique et de la première couche en matériau diélectrique de la deuxième zone de motif étant égale à l'épaisseur de la couche en matériau diélectrique du deuxième filtre de couleur ;

- Retrait de la couche de résine photosensible, de sorte à libérer en surface la première couche en matériau diélectrique de la première zone de motif formant la couche en matériau diélectrique de cavité de Fabry-Pérot du premier filtre de couleur;

- Dépôt conforme d'une deuxième couche réfléchissante sur la zone globale de motifs, formant les première couche réfléchissante du premier et deuxième filtres de couleurs.

Un troisième aspect de l'invention concerne un procédé de fabrication d'une matrice de filtrage multispectral selon l'invention dans lequel l'épaisseur de la couche en matériau diélectrique du premier filtre de couleur est supérieure à l'épaisseur de la couche en matériau diélectrique du deuxième filtre et la réalisation du premier et du deuxième filtres de couleur comporte les étapes suivantes:

- Dépôt sur un substrat porteur d'une couche de résine ;

- Structuration de la couche de résine pour obtenir un premier motif de résine définissant une première zone de motif et un deuxième motif de résine définissant une deuxième zone de motif, chaque motif de résine ayant une surface supérieure courbe, les première et deuxième zones de motif définissant une zone globale de motifs;

- Dépôt conforme d'une première couche réfléchissante sur la zone globale de motifs, formant les première couches réfléchissantes du premier et deuxième filtres de couleurs ;

- Dépôt conforme d'une première couche en matériau diélectrique sur la zone globale de motifs, la première couche en matériau diélectrique ayant une épaisseur égale à l'épaisseur de la couche en matériau diélectrique de cavité de Fabry-Pérot du premier filtre ;

- Dépôt d'une couche de résine photosensible sur la zone globale de motifs ;

- Elimination par photolithographie de la partie de la couche de résine photosensible recouvrant la deuxième zone de motif,

- Retrait d'une épaisseur de la couche en matériau diélectrique de la deuxième zone de motif pour obtenir l'épaisseur de la couche en matériau diélectrique du deuxième filtre ;

- Retrait de la couche de résine photosensible de sorte à libérer en surface la première couche en matériau diélectrique de la première zone de motif formant la couche en matériau diélectrique de cavité de Fabry-Pérot du premier filtre de couleur;

- Dépôt conforme d'une deuxième couche réfléchissante sur la zone globale de motifs, formant les première couche réfléchissante du premier et deuxième filtres de couleurs.

Grâce aux deuxième et troisième aspects de l'invention, les étapes de lithographie et de gravure sont limitées par rapport à l'état de l'art, notamment lorsque plusieurs matériau diélectriques composent la cavité de Fabry-Pérot.

Un quatrième aspect de l'invention concerne un procédé de fabrication d'une matrice de filtrage multispectral selon l'invention dans lequel l'épaisseur de la couche en matériau diélectrique du premier filtre de couleur est inférieure à l'épaisseur de la couche en matériau diélectrique du deuxième filtre et la réalisation du premier et du deuxième filtres de couleur comporte les étapes suivantes :

- Dépôt sur un substrat porteur d'une couche de résine ;

- Structuration de la couche de résine pour obtenir un premier motif de résine définissant une première zone de motif et un deuxième motif de résine définissant une deuxième zone de motif, chaque motif de résine ayant une surface supérieure courbe, les première et deuxième zones de motif définissant une zone globale de motifs;

- Dépôt conforme d'une première couche réfléchissante sur la zone globale de motifs, formant les première couche réfléchissante du premier et deuxième filtres de couleurs ;

- Dépôt d'une couche en matériau diélectrique sur la zone globale de motifs, ladite couche de matériau diélectrique présentant une surface supérieure sensiblement plane ;

- Dépôt d'une deuxième couche de résine sur la zone globale de motifs ;

- Structuration de la deuxième couche de résine, pour obtenir un premier et deuxième motifs de résine de la deuxième couche de résine respectivement dans la première et deuxième zone de motif, chaque motif de résine de la deuxième couche de résine ayant une surface supérieure courbe ;

- Transfert du premier et deuxième motifs de résine de la deuxième couche de résine dans la couche en matériau diélectrique pour obtenir la couche en matériau diélectrique du premier filtre dans la première zone de motif et la couche en matériau diélectrique du deuxième filtre dans la deuxième zone de motif ;

- Dépôt conforme d'une deuxième couche réfléchissante sur la zone globale de motifs, formant les première couche réfléchissante du premier et deuxième filtres de couleurs.

Grâce au quatrième aspect de l'invention, les différentes épaisseurs des couches en matériau diélectrique des filtres sont obtenues en une unique étape de gravure.

Outre les caractéristiques qui viennent d'être évoquées dans le paragraphe précédent, le procédé selon un deuxième, troisième et quatrième aspects de l'invention peut présenter une ou plusieurs caractéristiques complémentaires parmi les suivantes, considérées individuellement ou selon toutes les combinaisons techniquement possibles :

- l'étape de structuration de résine est réalisée en trois dimensions.

- l'étape de structuration de résine est réalisée par une lithographie Grayscale. La lithographie grayscale permet d'obtenir une forme non nécessairement plane des motifs de résine et permet de façonner la résine selon différentes formes courbes par exemple.

L'invention et ses différentes applications seront mieux comprises à la lecture de la description qui suit et à l'examen des figures qui l'accompagnent.

## BREVE DESCRIPTION DES FIGURES

Les figures sont présentées à titre indicatif et nullement limitatif de l'invention.

La [Fig.1] est une représentation de réponse spectrale d'un filtre de cavité de Fabry-Pérot de l'état de l'art, en fonction de l'angle d'incidence d'une onde électromagnétique incidente.

La [Fig. 2] est un schéma d'une matrice, selon l'invention, de deux éléments optoélectroniques comprenant respectivement deux filtres de couleur différents .

La [Fig. 3a] présente la réponse spectrale d'un premier filtre de couleur, pour différents angles d'incidence d'une onde électromagnétique incidente sur le premier filtre de la [Fig. 2].

La [Fig. 3b] présente la réponse spectrale d'un deuxième filtre de couleur, différent du premier filtre, pour différents angles d'incidence d'une onde électromagnétique incidente sur le deuxième filtre de la [Fig. 2].

La [Fig. 4] est un schéma détaillé d'un élément optoélectronique de la matrice selon le premier aspect de l'invention.

La [Fig. 5] est un schéma synoptique d'un procédé de fabrication de la matrice et en particulier des filtres de couleur selon un deuxième aspect de l'invention.

Les [Fig. 6], [Fig. 7], [Fig. 8], [Fig. 9], [Fig. 10], [Fig. 11], [Fig. 12], [Fig. 13], [Fig. 14], [Fig. 15] illustrent les étapes du procédé de la [Fig. 5] selon le deuxième aspect de l'invention,

La [Fig. 16] est un schéma synoptique d'un procédé de fabrication de la matrice et en particulier des filtres de couleur selon un troisième aspect de l'invention.

La [Fig. 17] illustre une étape du procédé selon le troisième aspect de l'invention.

La [Fig. 18] est un schéma synoptique d'un procédé de fabrication de la matrice et en particulier des filtres de couleur selon quatrième aspect de l'invention.

Les [Fig. 19] , [Fig. 20], [Fig. 21], [Fig. 22] illustrent des étapes du procédé de la [Fig. 18] selon le quatrième aspect de l'invention.

## DESCRIPTION DETAILLEE

Les figures sont présentées à titre indicatif et nullement limitatif de l'invention.

Il convient de rappeler au préalable que, de façon générale et bien connue de l'homme du métier, un filtre de couleur de type métal/diélectrique réalisé à partir d'une cavité de Fabry-Pérot est obtenu en dimensionnant l'épaisseur de la couche diélectrique formée entre les deux couches métalliques. Si le filtrage de plusieurs couleurs est recherché sur un même composant, il est alors nécessaire d'être en mesure d'obtenir une épaisseur de diélectrique d'épaisseur variable sur ce même composant.

Ce dimensionnement est par exemple réalisé à l'aide d'un programme de calcul électromagnétique tel que le formalisme de transfert de matrices d'Abeles ou un calcul de diffraction pour les pixels dont la taille est proche de la longueur d'onde tel que le formalisme de la Méthode Modale par Expansion de Fourier ou l'analyse rigoureuse par ondes couplées (RCWA selon la terminologie anglaise).

Ces programmes de calcul permettent de déterminer les paramètres optimaux des empilements métal diélectrique pour chaque pixel. Le calcul prend notamment en compte les épaisseurs des couches de métal et de diélectrique ainsi que leurs indices, le spectre et la distribution angulaire de la lumière incidente. Par exemple, dans le cas des filtres de Fabry-Pérot, la longueur d'onde centrale du filtre est déterminée approximativement par la formule suivante :

$$\lambda_{res} = \frac{2hn.\cos\theta}{m - \dfrac{\phi_1 + \phi_2}{2\pi}}$$

où

- h est l'épaisseur de la cavité, c'est-à-dire approximativement l'épaisseur de la couche diélectrique

- m, nombre entier positif entre 1 et 10, est l'ordre de la cavité,

- n est l'indice effectif de la cavité, et

- $\Phi 1$ et $\Phi 2$ sont les déphasages à la réflexion sur les miroirs métalliques (déterminés par la nature des matériaux en jeu et la longueur d'onde considérée),

- $\theta$ est l'angle d'incidence de la lumière incidente sur le filtre (compté à partir de la perpendiculaire à la surface du filtre).

Une fois l'ordre de la cavité choisi, l'angle d'attaque connu, l'indice et les déphasages connus, il ne reste plus alors qu'à déterminer une épaisseur approximative h pour que la cavité soit centrée sur une longueur d'onde particulière. Une fois la fonction de filtrage calculée pour chaque filtre et chaque longueur d'onde, les épaisseurs h des diélectriques sont alors ajustées en fonction des performances recherchées (recherche d'un bon rapport signal sur bruit, d'un maximum de transmission, etc.).

Une autre méthode plus empirique consiste à calculer, pour plusieurs épaisseurs h, la réponse de l'empilement et à choisir h tel que le pic de résonance du filtre ($\lambda$res) soit positionné conformément au cahier des charges.

Un premier aspect de l'invention concerne une matrice de filtrage multispectral, pour au moins une onde électromagnétique.

L'onde électromagnétique reçue par la matrice peut comprendre des longueurs d'ondes dans le domaine visible, infrarouge (proche, moyen ou lointain) ou microondes.

Dans la suite, on confondra les termes « Matrice de filtrage multispectral » et « Matrice ».

La matrice comprend au moins deux éléments optoélectroniques.

La [Fig.2] est un exemple de matrice 10 de deux éléments optoélectroniques ($E_1$, E2) comprenant chacun un filtre de couleur $F_i$ et un transducteur $T_i$ en regard dudit filtre $F_i$ de couleur.

On confondra les termes « filtre de couleur » et « filtre » dans la suite de la rédaction.

On entend par filtre de couleur $F_i$, un filtre transmettant uniquement ladite couleur lorsqu'il reçoit une onde électromagnétique.

Chaque filtre $F_i$ comprend une première couche réfléchissante $C_{r1i}$, une deuxième couche réfléchissante $C_{r2i}$ et une couche en matériau diélectrique $C_{FPi}$ entre les deux couches réfléchissantes ($C_{r1i}$, $C_{r2i}$).

On confondra les termes « couche en matériau diélectrique de cavité de Fabry-Pérot », « couche en matériau diélectrique » et « couche en diélectrique » dans la suite de la rédaction.

Selon l'invention, les épaisseurs ($h_1,h_2$) des deux couches en matériau diélectrique $C_{FPi}$ des deux filtres ($F_1$, $F_2$) sont différentes. Ainsi, lorsque chaque filtre $F_i$ reçoit une onde incidente électromagnétique, celui-ci transmet une longueur d'onde $\lambda_{res\_i}$ dépendant de l'épaisseur $h_i$ de sa couche en diélectrique $C_{FPi}$ d'après la formule citée précédemment :

$$\lambda_{res\_i} = \frac{2h_i.n.\cos\theta}{m - \dfrac{\phi_1 + \phi_2}{2\pi}}$$

Dans l'exemple de la [Fig. 2], l'épaisseur $h_1$ de la couche diélectrique $C_{FP1}$ du premier filtre $F_1$ est supérieure de l'épaisseur $h_2$ de la couche diélectrique $C_{FP2}$ du deuxième filtre $F_2$

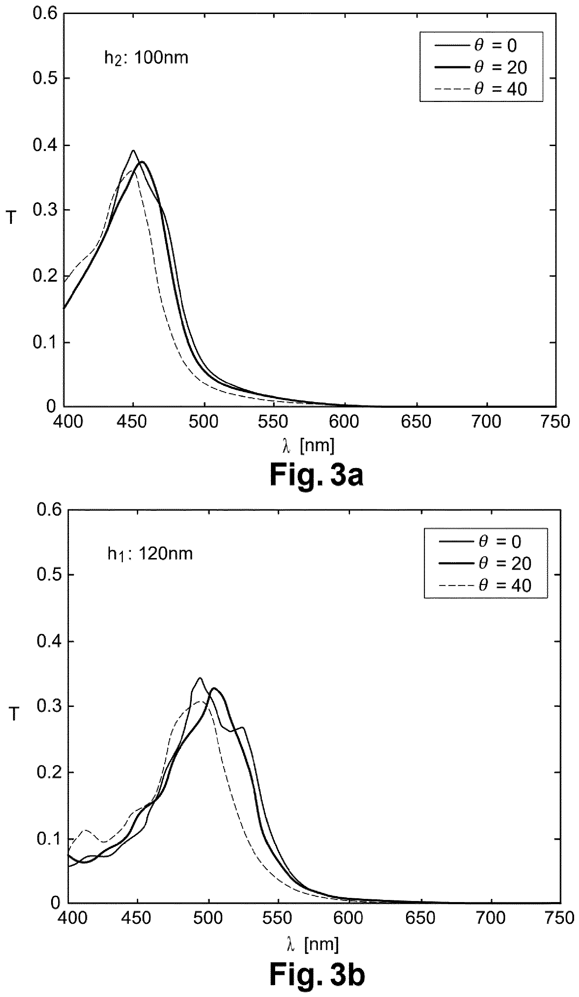

La [Fig. 3a] est une représentation des réponses spectrale du premier filtre $F_1$ pour une épaisseur $h_1$ de la couche de diélectrique à $C_{FP1}$ égale à 100 nm et pour plusieurs angles d'incidences $\theta$ d'une onde électromagnétique incidente. On remarque ainsi que pour un angle d'incidence $\theta$ égal à 0°, 20° et 40°, les réponses spectrales du premier filtre $F_1$ sont sensiblement identiques et ne dépendent donc pas de l'angle d'incidence de l'onde.

La [Fig. 3b] est une représentation des réponses spectrale du deuxième filtre $F_2$ pour une épaisseur $h_2$ de la couche de diélectrique à $C_{FP1}$ égale à 120 nm et pour plusieurs angles d'incidences $\theta$ d'une onde électromagnétique incidente. On remarque ainsi que pour un angle d'incidence $\theta$ égal à 0°, 20° et 40°, les réponses spectrales du deuxième filtre $F_2$ sont également sensiblement identiques et ne dépendent donc pas de l'angle d'incidence de l'onde.

On remarque dans les [Fig. 3a] et [Fig. 3b] que les deux longueurs d'ondes transmise par le premier filtre $F_1$ et le deuxième filtre $F_2$, respectivement, sont bien différentes, au vu des deux épaisseurs ($h_1$, $h_2$) différentes des deux couches en diélectrique ($C_{FP1}$, $C_{FP1}$) des deux filtres .

Lorsque la matrice 10 comprend au moins trois éléments optoélectroniques $E_i$, au moins deux éléments optoélectronique $E_i$ comprennent respectivement deux filtres $F_i$ différents. Le troisième élément optoélectronique $E_3$ peut comprendre un filtre $F_3$ identique à l'un des deux autres filtres $F_i$ des deux autres éléments optoélectroniques $E_i$ ou un filtre $F_3$ différent des deux éléments optoélectroniques.

On entend par « deux filtres différents », deux filtres ayant deux épaisseurs de couche de diélectrique respectives différentes.

On entend par « deux filtres identiques », deux filtres ayant deux épaisseurs de couche de diélectrique respectives identiques.

Par exemple, une matrice 10 de type RGB peut comprendre 50% de filtres de couleur verte, 25% de filtres de couleur rouge et 25% de filtres de couleur bleue.

Selon un mode de réalisation non représenté la matrice 10 comprend un nombre C x L d'éléments optoélectroniques $E_i$, C représentant le nombre de colonnes de la matrice 10 et L représentant le nombre de lignes de la matrice 10.

L et C sont deux entiers naturels strictement supérieurs à 0. Au moins l'un des entiers naturels L ou C est supérieur ou égal à 2.

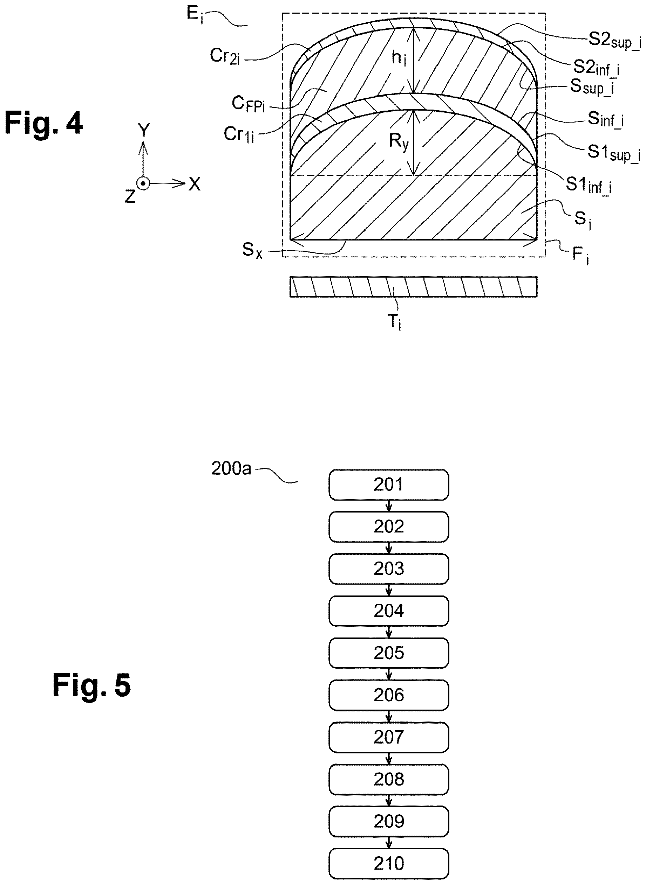

La structure de chaque élément optoélectronique $E_i$ est représentée en détail dans la [Fig. 4].

Chaque élément optoélectronique $E_i$ est un pixel.

Chaque élément optoélectronique $E_i$ peut comprendre, en plus du filtre $F_i$ et du transducteur $T_i$, un substrat porteur Si sur lequel sont réalisé les différentes couches.

Chaque couche réfléchissante ($Cr_{1i}$, $Cr_{2i}$) de chaque filtre $F_i$ est de préférence en métal et a une fonction de miroir métallique. Le métal est par exemple l'argent.

Les surfaces supérieure $S1_{sup\_i}$ et inférieure $S1_{inf\_i}$ de la première couche réfléchissante $Cr_{1i}$ de chaque filtre $F_i$ sont courbes.

Les surfaces supérieure $S2_{sup\_i}$ et inférieure $S2_{inr\_i}$ de la deuxième couche réfléchissante $Cr_{2i}$ de chaque filtre $F_i$ sont également courbes.

Pour chaque filtre $F_i$, chaque couche en matériau diélectrique $C_{FPi}$ comporte une surface inférieure au contact $S_{inf\_i}$ de la première couche réfléchissante $Cr_{1i}$ et une surface supérieure $S_{sup\_i}$ au contact de la deuxième couche réfléchissante $Cr_{2i}$.

Ici, la surface inférieure $S_{inf\_i}$ de la couche en diélectrique $C_{FPi}$ est au contact de la surface supérieure $S1_{sup\_i}$ de la première couche réfléchissante $Cr_{1i}$. Le rayon de courbure de la surface supérieure $S1_{sup\_i}$ de la première couche réfléchissante $Cr_{1i}$ est égal au rayon de courbure de la surface inférieure $S_{inf\_i}$ de la couche en matériau diélectrique $C_{FPi}$.

De même, la surface supérieure $S_{sup\_i}$ de la couche en diélectrique $C_{FPi}$ est au contact de la surface inférieure $S2_{inr\_i}$ de la deuxième couche réfléchissante $Cr_{2i}$. Le rayon de courbure de la surface supérieure $S2_{inr\_i}$ de la deuxième couche réfléchissante $Cr_{2i}$ est égal au rayon de courbure de la surface supérieure de la couche en matériau diélectrique $C_{FPi}$.

Pour chaque filtre de couleur $F_i$, les courbures de la surface inférieure $S_{inf\_i}$ et de la surface supérieure $S_{sup\_i}$ de la couche de matériau diélectrique $C_{FPi}$ sont toutes les deux convexes. Dans ce mode de réalisation, les courbures de la surface inférieure $S1_{inf\_i}$ et de la surface supérieure $S1_{sup\_i}$ de la première couche réfléchissante $Cr_{1i}$ et les courbures de la surface inférieure $S2_{inr\_i}$ et de la surface supérieure $S2_{sup\_i}$ de la deuxième couche réfléchissante $Cr_{2i}$ sont tous les quatre convexes.

Lorsque les surfaces supérieures $S2_{sup\_i}$ et inférieures $S2_{inr\_i}$ de la deuxième couche réfléchissante $Cr_{2i}$ d'un filtre $F_i$ sont convexes, le filtre $F_i$ permet de focaliser l'onde électromagnétique sur le transducteur $T_i$ en regard dudit filtre $F_i$, contrairement à un filtre classique de l'état de l'art qui nécessite une microlentille au-dessus des cavités de Fabry-Pérot afin de focaliser une onde incidente.

De préférence, le rayon de courbure de la surface inférieure $S_{inf\_i}$ et de la surface supérieure $S_{sup\_i}$ de la couche en matériau diélectrique $C_{FPi}$ de chaque filtre de couleur $F_i$ est strictement supérieur à 300 nm.

Le matériau diélectrique de la couche en matériau diélectrique $C_{FPi}$ de chaque filtre de couleur $F_i$ est préférentiellement mais non limitativement un matériau transparent dans le domaine du visible tel qu'un matériau organique du type polymère photosensible modelé puis durci, ou un matériau ou inorganique (oxyde, nitrure de silicium, alumine, ...). Il convient de noter que l'invention ne se limite pas au domaine du visible et que d'autres matériaux transparents à d'autres longueurs d'onde, dans l'infrarouge par exemple (par exemple en utilisant du silicium), peuvent être utilisés.

Chaque filtre $F_i$ se comporte comme un matériau dont l'indice de réfraction constant est de 1,46, ce qui est proche de l'indice de réfraction du $SiO_2$ qui vaut 1.47 dans le spectre visible.

L'épaisseur $h_i$ de la couche en matériau diélectrique $C_{FPi}$ de chaque filtre de couleur $F_i$ est de préférence constante tout le long de ladite couche $C_{FPi}$. En d'autres termes, le rayon de courbure de la surface supérieure $S_{sup\_i}$ et le rayon de courbure de la surface inférieure $S_{inf\_i}$ de la couche en matériau diélectrique $C_{FPi}$ sont identiques.

Dans le cas des figures 3a et 3b, l'épaisseur $h_i$ d'une couche en diélectrique $C_{FPi}$ de chaque filtre $F_i$ est respectivement égale à 100nm et 120nm.

Selon un autre mode de réalisation, chaque filtre $F_i$ de couleur a une épaisseur $h_{diel\_i}(x,y)$ dépendant de la position x sur l'axe X et de la position y sur l'axe Y.

Selon un mode de réalisation, le profil courbe de la surface inférieure $S_{inf\_i}$ de la couche en diélectrique $C_{FPi}$ d'au moins un filtre $F_i$ est défini par l'équation suivante dans un repère (O,X,Y) d'un repère (O,X,Y,Z) de l'espace, avec O l'origine de la surface inférieure de la première couche réfléchissante $S1_{inf\_i}$ :

$$y = R_y * \left(1 - \left|\frac{x}{f*Sx}\right|^m\right)^{\frac{1}{n}} + h_{Cri1} .$$

Et le profil courbe de la surface supérieure $S_{sup\_i}$ de la couche en matériau diélectrique $C_{FP}$ est défini par l'équation suivante :

$$y = R_y * \left(1 - \left|\frac{x}{f*Sx}\right|^m\right)^{\frac{1}{n}} + hi + h_{Cri1}$$

$h_{Cri1}$ est l'épaisseur de la première couche réfléchissante $Cr_{1i}$ dudit filtre $F_i$.

$h_i$ est l'épaisseur de la couche en matériau diélectrique $C_{FPi}$ dudit filtre F, selon l'axe Y de préférence.

$R_y$ est le rayon de courbure de la surface inférieure selon l'axe Y pour x=0.

m et n sont respectivement un entier naturel et un entier naturel non nul.

Par exemple, m = 1.8 et n = 0.8.

Le terme f*Sx est le rayon de courbure de la surface inférieure $S_{inf\_i}$ et de la surface supérieure $S_{sup\_i}$ de la couche en matériau diélectrique $C_{FPi}$ selon l'axe X.

$S_x$ est la taille, selon l'axe X, de l'élément optoélectronique $E_i$ .

$S_x$ est un réel positif, par exemple égal à 2000 nm ou 5000nm.

f est une constante qui définit le rayon de courbure de la surface inférieure $S_{inf\text{-}i}$ et de la surface supérieure $S_{sup\_i}$ de la couche en matériau diélectrique $C_{FPi}$ selon l'axe X.

De préférence, la constante f est comprise entre 0.4 et 1. Par exemple, f vaut 0.5.

Selon un autre mode de réalisation d'un filtre en trois dimensions, le profil courbe de la surface inférieure $S_{inf\_i}$ de la couche en diélectrique $C_{FPi}$ d'au moins un filtre Fi est défini par l'équation suivante :

$$z = R_z * \left(1 - \left|\frac{x}{f*Sx}\right|^m - \left|\frac{y}{f*Sy}\right|^n\right)^{\frac{1}{k}} + h_{Cri1}$$

Le profil courbe de la surface supérieure $S_{sup\_i}$ de la couche en diélectrique $C_{FPi}$ est défini par l'équation suivante :

$$z = R_z * \left(1 - \left|\frac{x}{f*Sx}\right|^m - \left|\frac{y}{f*Sy}\right|^n\right)^{\frac{1}{k}} + h_i + h_{Cri1}.$$

Rz est le rayon de courbure de la surface inférieure selon l'axe Z.

$S_y$ est la taille, selon l'axe Y, de l'élément . $S_Z$ est un réel positif.

f est une constante qui définit le rayon de courbure de la surface inférieure $S_{inf\_i}$ et de la surface supérieure $S_{sup\_i}$ selon l'axe X et selon l'axe Y.

De préférence, f est compris entre 0.4 et 1. Par exemple, f vaut 0.5.

Le terme f*Sx est le rayon de courbure de la surface inférieure $S_{inf\_i}$ et de la surface supérieure $S_{sup\_i}$ de la couche en matériau diélectrique $C_{PFi}$ selon l'axe X.

Le terme f*Sy est le rayon de courbure de la surface inférieure $S_{inf\_i}$ et de la surface supérieure $S_{sup\_i}$ de la couche en matériau diélectrique $C_{PFi}$ selon l'axe Y.

k est un entier naturel non nul. Les transducteurs photoélectriques $T_i$ peuvent fonctionner soit en tant que collecteur de la lumière issue des filtres soit en tant qu'émetteur de lumière vers les filtres. S'il s'agit de collecteurs, les transducteurs peuvent être par exemple des photodiodes de type CMOS. S'il s'agit d'émetteurs, les transducteurs peuvent être par exemple des diodes LED, des diodes de type QLED ou des diodes LASER, les émetteurs présentant dans ce cas un spectre d'émission plus large que celui des cavités de Fabry-Pérot correspondantes.

Un deuxième aspect de l'invention concerne un procédé 200a de fabrication d'une matrice 10 de filtrage multispectral dans lequel l'épaisseur $h_1$ de la couche en matériau diélectrique $C_{FP1}$ du premier filtre $F_1$ de couleur est inférieure à l'épaisseur $h_2$ de la couche en matériau diélectrique $C_{FP2}$ du deuxième filtre $F_2$.

La figure [Fig.5] est un schéma synoptique du procédé 200a de fabrication de la matrice 10 de filtrage multispectral selon le deuxième aspect de l'invention et en particulier des étapes de réalisation du premier $F_1$ et du deuxième $F_2$ filtres de couleur.

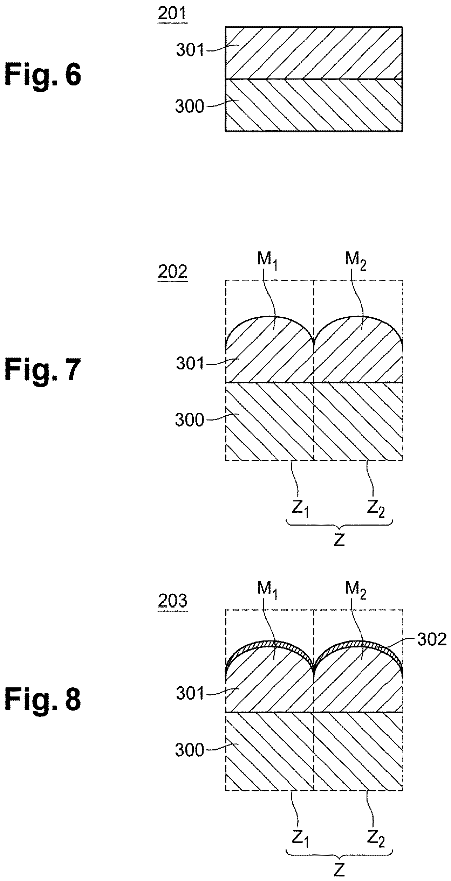

La première étape 201 du procédé 200a selon le deuxième aspect de l'invention, illustrée en [Fig. 6], consiste à déposer une couche de résine 301 sur un substrat porteur 300 . Le substrat porteur 300 peut par exemple être un substrat en Si, un substrat Silicium sur Isolant SOI (pour « Silicon On Insulator » selon la terminologie anglaise) ou un substrat en verre ou en saphir.

La deuxième étape 202 du procédé 200a, illustrée en [Fig. 7], consiste à structurer, la couche de résine 301 pour obtenir au moins un premier motif $M_1$ de résine définissant une première zone $Z_1$ de motif et un deuxième motif $M_2$ de résine définissant une deuxième zone de motifs $Z_2$.

Chaque motif $M_i$ de résine a une surface supérieure courbe.

La première $Z_1$ et deuxième $Z_2$ zone de motif définissent une zone Z globale de motifs.

La structuration est réalisée par exemple en deux dimensions ou de préférence en trois dimensions.

La structuration de résine peut être réalisée par une méthode de lithographie. Cette lithographie peut être préférentiellement une lithographie en niveaux de gris (ou Grayscale selon la terminologie anglaise) électronique ou optique (suivie d'une stabilisation de la résine Grayscale par procédé thermique ou ultraviolet). D'autres techniques de lithographie telles que la lithographie à deux photons ou par nano-impression peuvent également être utilisées pour la réalisation de la structure en résine. Il est possible de fixer librement les dimensions et la courbure de la surface supérieure de chaque motif de résine dans les trois directions de l'espace (O,X,Y,Z) .

La troisième étape 203 du procédé 200a selon le deuxième aspect de l'invention, illustrée en [Fig. 8], consiste à déposer, de façon conforme, une première couche réfléchissante 302 sur la zone globale de motifs Z. La première couche réfléchissante 302 recouvre entièrement les premier $M_1$ et deuxième $M_2$ motifs de résine et forme la première couche réfléchissante $Cr_{1i}$ de chaque filtre $F_i$ de couleur.

Chaque couche réfléchissante est de préférence déposée en continu sur le premier $M_1$ et deuxième $M_2$ motifs de résine par dépôt chimique par phase vapeur assisté par plasma PECVD (Plasma-Enhanced Chemical Vapor Deposition en anglais), par dépôt physique par vapeur PVD (Physical Vapor Deposition), par dépôt par ablation laser pulsé PLD (Pulsed Laser Deposition) ou par dépôt de couches minces atomiques ALD (atomic layers deposition) par exemple.

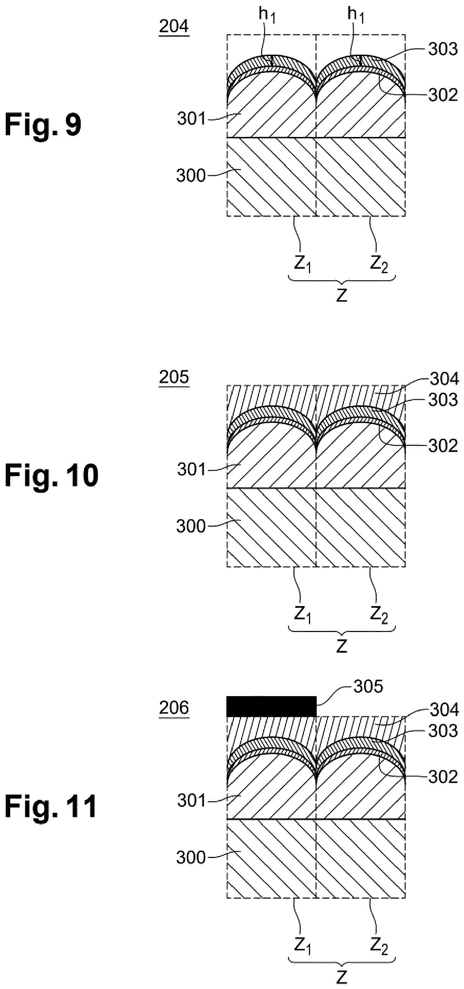

La quatrième étape 204 du procédé 200a selon le deuxième aspect de l'invention, illustrée en [Fig. 9], consiste à déposer, de façon conforme, une première couche 303 en matériau diélectrique sur la zone globale de motifs Z .

La première couche 303 en matériau diélectrique est de préférence déposée en continu selon les méthodes de dépôt conforme citées précédemment et recouvre entièrement, indirectement, le premier $M_1$ et deuxième $M_2$ motifs de résine.

La première couche 303 en matériau diélectrique a une épaisseur égale à l'épaisseur $h_1$ de la couche en matériau diélectrique $C_{FP1}$ de cavité de Fabry-Pérot du premier filtre $F_1$.

La cinquième étape 205 du procédé 200a selon le deuxième aspect de l'invention, illustrée en [Fig. 10], consiste à déposer une couche de résine telle qu'une résine photosensible 304 sur la zone globale de motifs Z. La résine photosensible est de préférence un polymère photosensible.

Le procédé 200a selon le deuxième aspect de l'invention peut comprendre une sixième étape 206,illustrée en [Fig. 11], consistant à utiliser masque 305 pour exposer la partie de la couche de résine photosensible 304 recouvrant la deuxième zone $Z_2$ de motif de sorte que la partie de la couche de résine exposée puisse ensuite être gravées sélectivement.

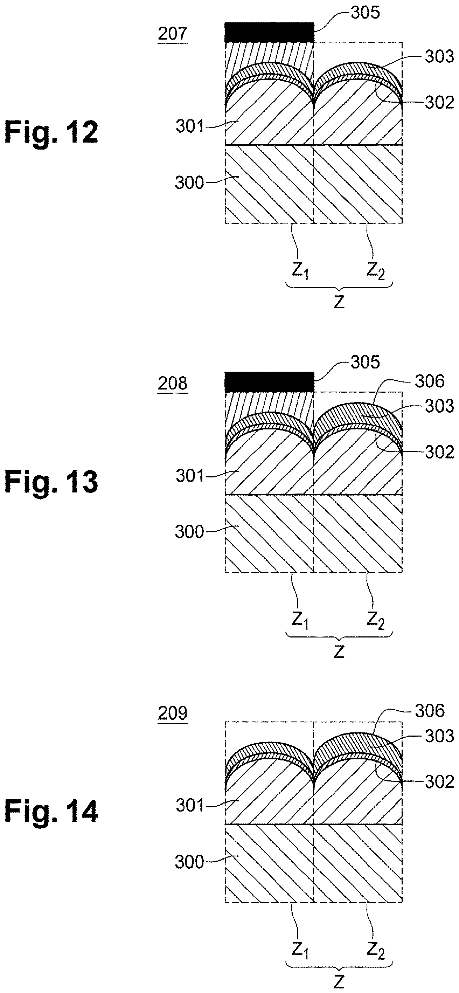

La septième étape 207 du procédé 200a selon le deuxième aspect de l'invention, illustrée en [Fig. 12], consiste à éliminer la partie de la couche de résine photosensible 304 recouvrant la deuxième zone $Z_2$ de motif.

La huitième étape 208 du procédé 200a selon le deuxième aspect de l'invention, illustrée en [Fig. 13], consiste à déposer une deuxième couche 306 en matériau diélectrique sur la deuxième zone $Z_2$ de motifs, pour former avec la partie de la première couche 303 de la deuxième zone $Z_2$ de motifs, la couche en matériau diélectrique $C_{FP2}$ de cavité de Fabry-Pérot du deuxième filtre de couleur $F_2$.

Ainsi, l'épaisseur totale de la deuxième couche 306 en matériau diélectrique et de la première couche 303 en matériau diélectrique de la deuxième zone $Z_2$ de motifs est égale à l'épaisseur $h_2$ de la couche en matériau diélectrique $C_{FP2}$ du deuxième filtre $F_2$ .

La neuvième étape 209 du procédé 200a selon le deuxième aspect de l'invention, illustrée en [Fig. 14], consiste à retirer la couche de résine photosensible non éliminée à la septième étape 207, de sorte à libérer en surface la couche en matériau diélectrique $C_{FP1}$ de cavité de Fabry-Pérot du premier filtre $F_1$.

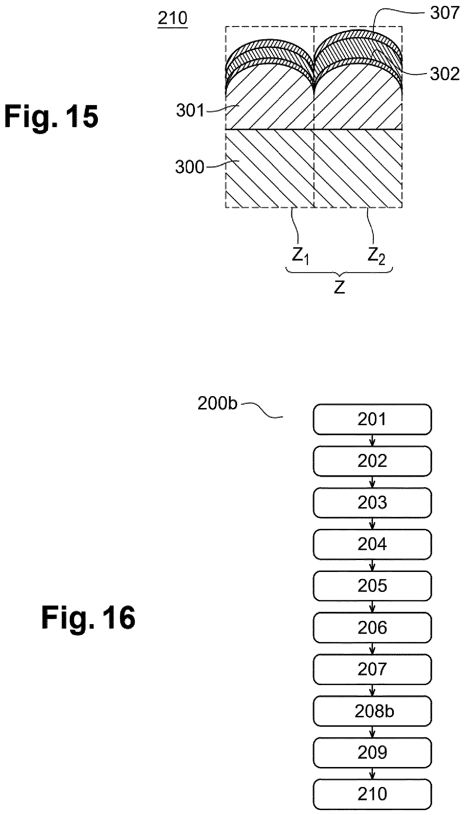

La dixième étape 210 du procédé 200a selon le deuxième aspect de l'invention, illustrée en [Fig.15], consiste à déposer une deuxième couche réfléchissante 307 sur la zone globale Z de motifs pour former respectivement la deuxième couche réfléchissante $C_{FP2}$ du premier $F_1$ et deuxième $F_2$ filtres de couleur.

Un troisième aspect de l'invention concerne un procédé 200b de fabrication d'une matrice 10 de filtrage multispectral dans lequel l'épaisseur $h_1$ de la couche en matériau diélectrique $C_{FP1}$ du premier filtre $F_1$ de couleur est supérieure à l'épaisseur $h_2$ de la couche en matériau diélectrique $C_{FP2}$ du deuxième filtre $F_2$.

La figure [Fig.16] est un schéma synoptique du procédé 200b de fabrication de la matrice 10 de filtrage multispectral selon le troisième aspect de l'invention et en particulier les étapes de réalisation du premier $F_1$ et du deuxième filtres $F_2$ de couleur.

Le procédé 200b selon le troisième aspect de l'invention comprend des première 201, deuxième 202, troisième 203, quatrième 204, cinquième 205, sixième 206 et septième 207 étapes identiques aux étapes du procédé 200a selon le deuxième aspect de l'invention.

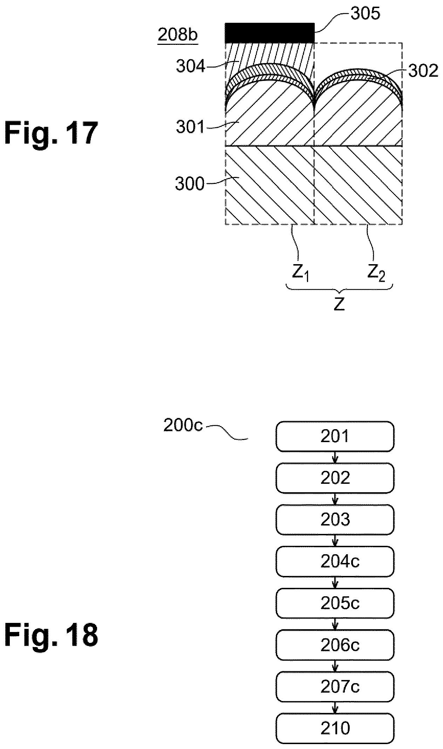

La huitième 208b étape du procédé selon le troisième aspect de l'invention, illustrée en [Fig. 17], consiste à retirer une épaisseur de la première couche 303 en matériau diélectrique de la deuxième zone $Z_2$ pour obtenir l'épaisseur $h_2$ de la couche en matériau diélectrique $C_{FP2}$ de cavité de Fabry-Pérot du deuxième filtre $F_2$.

Le procédé 200b selon le troisième aspect de l'invention comprend ensuite les neuvième 209 et dixième 210 étapes identiques à celles du procédé 200a selon le deuxième aspect de l'invention.

Un quatrième aspect de l'invention concerne un procédé 200c de fabrication de la matrice 10 de filtrage multispectral dans lequel l'épaisseur $h_1$ de la couche en matériau diélectrique $C_{FP1}$ du premier filtre $F_1$ de couleur est inférieure à l'épaisseur $h_2$ de la couche en matériau diélectrique $C_{FP2}$ du deuxième filtre $F_2$.

La figure [Fig.18] est un schéma synoptique d'un procédé de fabrication de la matrice 10 de filtrage multispectral selon un quatrième aspect de l'invention et en particulier les étapes de réalisation du premier $F_1$ et du deuxième $F_2$ filtres de couleur.

Le procédé 200c selon le quatrième aspect de l'invention comprend les première 201, deuxième 202 et troisième 203 étapes identiques à celles illustrées pour le procédé 200a selon le deuxième aspect de l'invention.

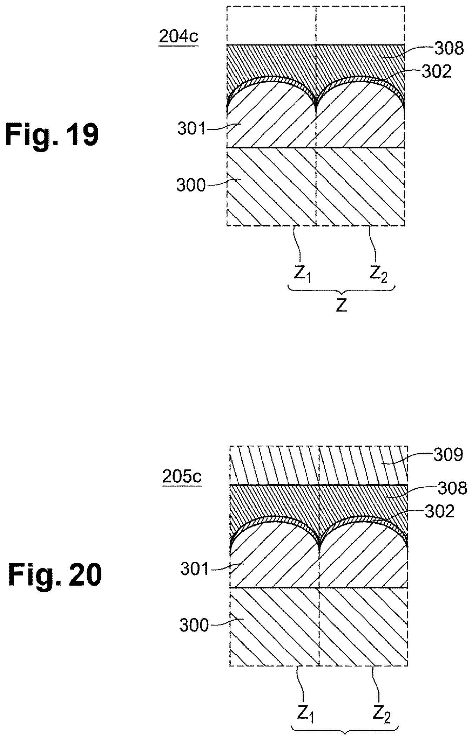

La quatrième étape 204c du procédé selon le quatrième aspect de l'invention, illustrée en [Fig. 19], consiste à déposer une couche 308 en matériau diélectrique sur la zone globale de motifs, ladite couche 308 présentant une surface supérieure plane.

La cinquième étape 205c du procédé 200c selon le quatrième aspect de l'invention, illustrée en [Fig. 20], consiste à déposer une deuxième couche 309 de résine sur la zone globale Z de motifs.

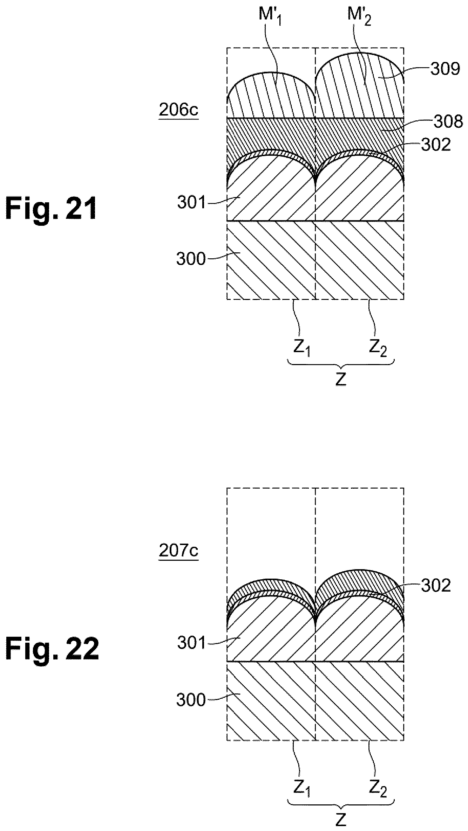

La sixième étape 206c du procédé 200c selon le quatrième aspect de l'invention, illustrée en [Fig. 21], consiste à structurer, de préférence en trois dimensions, la deuxième couche de résine 309, pour obtenir un premier $M'_1$ motif dans la première zone $Z_1$ de motif et un deuxième $M'_2$ motif dans la deuxième zone $Z_2$ de motif. La structuration de résine est réalisée selon les mêmes méthodes que celles citées à la deuxième étape du procédé 200a selon le deuxième aspect de l'invention.

Chaque motif de résine $M'_i$ de la deuxième couche de résine 309 a une surface supérieure courbe.

Les hauteurs moyennes des deux motifs en résine $M'_1$, $M'_2$ de la deuxième couche de résine 309, relativement à la surface plane de la couche 308 en matériau diélectrique, sont différentes.

La hauteur du premier motif $M'_1$ de la deuxième couche de résine 309 est inférieure à la hauteur du deuxième motif $M'_2$ de la deuxième couche de résine 309.

La septième étape 207c du procédé 200c selon le quatrième aspect de l'invention, illustrée en [Fig. 22], consiste à transférer le premier $M'_1$ et deuxième $M'_2$ motifs de résine de la deuxième couche de résine 309 dans la couche en matériau diélectrique 308, pour d'obtenir la couche en matériau diélectrique $C_{FP1}$ du premier filtre $F_1$ dans la première zone de motif et la couche en matériau diélectrique $C_{FP2}$ du deuxième filtre $F_2$ dans la deuxième zone $Z_2$ de motif.

Le transfert de motif est réalisé de préférence par gravure, de manière non sélective et à vitesse constante.

Le procédé 200c selon le quatrième aspect de l'invention comprend en outre la dixième 210 étape du procédé 200a selon le deuxième aspect de l'invention.

## Revendications

**1.** Matrice (10) de filtrage multispectral pour une onde électromagnétique, la matrice comportant au moins un premier ($E_1$) et un deuxième éléments optoélectroniques ($E_2$), chaque élément optoélectronique ($E_i$) comprenant un filtre de couleur ($F_i$) et un transducteur photoélectrique ($T_i$) en regard dudit filtre ($F_i$), chaque filtre de couleur ($F_i$) formant une cavité Fabry-Pérot comportant une première couche réfléchissante ($Cr_{1i}$), une deuxième couche réfléchissante ($Cr_{2i}$) et une couche en matériau diélectrique ($C_{FPi}$) de cavité de Fabry-Pérot entre la première couche réfléchissante ($Cr_{1i}$) et la deuxième couche réfléchissante ($Cr_{2i}$), la couche de matériau diélectrique ($C_{FPi}$) comportant :

- une surface inférieure ($S_{inf\_i}$), au contact de la première couche réfléchissante ($Cr_{1i}$); la surface inférieure ($S_{inf\_i}$) étant courbe;
- Une surface supérieure ($S_{sup\_i}$) au contact de la deuxième couche réfléchissante ($Cr_{1i}$), la surface supérieure ($S_{sup\_i}$) étant courbe;

les épaisseurs des deux couches en matériau diélectrique des deux filtres de couleur étant différentes.

**2.** Matrice (10) de filtrage multispectral selon la revendication précédente **caractérisée en ce que**, pour chaque filtre de couleur ($F_i$):

- La première couche réfléchissante ($Cr_{1i}$) présente une surface inférieure courbe ($S1_{inf\_i}$), et une surface supérieure courbe ($S1_{sup\_i}$), de même rayon de courbure, la surface supérieure de la première couche réfléchissante ($S1_{sup\_i}$) étant au contact de la surface inférieure ($S_{inf\_i}$) de la couche en matériau diélectrique (C$_{FPi}$),
- La deuxième couche réfléchissante (Cr$_{2i}$) présente une surface inférieure (S2$_{inf\_i}$) courbe, et une surface supérieure courbe (S2$_{sup\_i}$), de même rayon de courbure, la surface inférieure (S2$_{inf\_i}$) de la deuxième couche réfléchissante étant au contact de la surface supérieure (S$_{sup\_i}$) de la couche en matériau diélectrique (C$_{FPi}$).

3. Matrice (10) de filtrage multispectral selon l'une quelconque des revendications précédentes **caractérisée en ce que** les rayons de courbure de la surface inférieure (S$_{inf\_i}$) et de la surface supérieure (S$_{sup\_i}$) de la couche de matériau diélectrique (C$_{FPi}$) de chaque filtre de couleur (F$_i$) sont strictement supérieurs à 300 nm.

4. Matrice (10) selon l'une quelconque des revendications précédentes **caractérisée en ce que**, pour chaque filtre de couleur (F$_i$), les courbures de la surface inférieure (S$_{inf\_i}$) et de la surface supérieure (S$_{sup\_i}$) de la couche de matériau diélectrique (C$_{FPi}$) de chaque filtre de couleur (F$_i$) sont toutes les deux convexes ou toutes les deux concaves.

5. Matrice (10) selon l'une quelconque des revendications précédentes **caractérisée en ce que** le profil courbe de la surface inférieure (S$_{sup\_i}$) de la couche en matériau diélectrique (C$_{FPi}$) d'au moins un filtre (F$_i$) de couleur parmi le premier (F$_1$) et le deuxième (F$_2$) filtres de couleur est défini par l'équation suivante :

$$y = R_y * \left( 1 - \left| \frac{x}{f*Sx} \right|^m \right)^{\frac{1}{n}} + h_{Cri1}$$

et **en ce que** le profil courbe de la surface supérieure (S$_{inf\_i}$) de ladite couche est défini par l'équation suivante :

$$y = R_y * \left( 1 - \left| \frac{x}{f*Sx} \right|^m \right)^{\frac{1}{n}} + hi + h_{Cri1}$$

Dans un repère (O,X,Y,Z) de l'espace, O étant l'origine de la surface inférieure de la première couche réfléchissante (S1$_{inf\_i}$) du filtre F$_i$ ; Avec:

- hi l'épaisseur de la couche en matériau diélectrique (C$_{FPi}$) dudit filtre (Fi),
- h$_{Cri1}$ l'épaisseur, selon l'axe Y, de la première couche réfléchissante (C$_{r1i}$) du filtre (F$_i$),
- R$_y$ le rayon de courbure de la surface inférieure (S$_{inf\_i}$) et de la surface supérieure (S$_{sup\_i}$) de la couche en matériau diélectrique (C$_{FPi}$) selon l'axe Y pour x=0,
- m et n respectivement un entier naturel et un entier naturel non nul,
- Avec f*Sx le rayon de courbure de la surface inférieure (S$_{inf\_i}$) et de la surface supérieure (S$_{sup\_i}$) selon l'axe X, Sx étant la taille, selon l'axe X, du transducteur photoélectrique (Ti) en regard du filtre (Fi) et f une constante.

6. Matrice (10) selon l'une quelconque des revendications 1 à 4 **caractérisée en ce que** le profil courbe de la surface inférieure (S$_{sup\_i}$) de la couche en matériau diélectrique (C$_{FPi}$) d'au moins un filtre (F$_i$) de couleur parmi le premier (F$_1$) et le deuxième (F$_2$) filtres de couleur est défini par l'équation suivante :

$$z = R_z * \left( 1 - \left| \frac{x}{f * Sx} \right|^m - \left| \frac{y}{f * Sy} \right|^n \right)^{\frac{1}{k}} + h_{Cri1}$$

et **en ce que** le profil courbe de la surface supérieure (S$_{inf\_i}$) de ladite couche est défini par l'équation suivante :

$$z = R_z * \left( 1 - \left| \frac{x}{f * Sx} \right|^m - \left| \frac{y}{f * Sy} \right|^n \right)^{\frac{1}{k}} + hi + h_{Cri1}$$

Dans un repère (O,X,Y,Z) de l'espace, O étant l'origine de la surface inférieure de la première couche réfléchissante (S1$_{inf\_i}$) du filtre Fi ;
Avec:

- hi l'épaisseur de la couche en matériau diélectrique ($C_{FPi}$) dudit filtre (Fi),
- $h_{Cri1}$ l'épaisseur, selon l'axe Y, de la première couche réfléchissante ($C_{r1i}$) du filtre ($F_i$),
- Rz est le rayon de courbure de la surface inférieure ($S_{inf\_i}$) et de la surface supérieure ($S_{sup\_i}$) de la couche en matériau diélectrique ($C_{FPi}$) selon l'axe Z,
- m et n respectivement un entier naturel et un entier naturel non nul,
- Avec f*Sx le rayon de courbure de la surface inférieure ($S_{inf\_i}$) et de la surface supérieure ($S_{sup\_i}$) de la couche en matériau diélectrique ($C_{FPi}$) selon l'axe X, Sx étant la taille, selon l'axe X, du transducteur photoélectrique (Ti) en regard du filtre (Fi) et f une constante,
- Avec f*Sy le rayon de courbure de la surface inférieure ($S_{inf\_i}$) et de la surface supérieure ($S_{sup\_i}$) de la couche en matériau diélectrique ($C_{FPi}$) selon l'axe Y, Sy étant la taille, selon l'axe Y, du transducteur photoélectrique (Ti) en regard du filtre (Fi).

7. Matrice (10) selon l'une des revendications précédentes **caractérisée en ce que**, pour chaque filtre de couleur ($F_i$), les courbures de la surface inférieure ($S_{inf\_i}$) et de la surface supérieure ($S_{sup\_i}$) de la couche de matériau diélectrique ($C_{FPi}$) sont toutes les deux convexes, la courbure de la surface supérieure ($S_{sup\_i}$) et de la surface inférieure ($S_{inf\_i}$) de la couche en matériau diélectrique ($C_{FPi}$) étant choisie de manière à focaliser l'onde électromagnétique sur le transducteur ($T_i$) en regard dudit filtre ($F_i$).

8. Procédé (200a) de fabrication d'une matrice (10) de filtrage multispectral selon l'une quelconque des revendications précédentes **caractérisé en ce que** l'épaisseur ($h_1$) de la couche en matériau diélectrique ($C_{FP1}$) du premier filtre ($F_1$) de couleur est inférieure à l'épaisseur ($h_2$) de la couche en matériau diélectrique ($C_{FP2}$) du deuxième filtre ($F_2$) de couleur et la réalisation du premier ($F_1$) et du deuxième ($F_2$) filtres de couleur comporte les étapes suivantes:

   - Dépôt (201) sur un substrat porteur (300), d'une couche de résine (301);
   - Structuration (202) de la couche de résine (301), pour obtenir un premier ($M_1$) motif de résine définissant une première zone ($Z_1$) de motif et un deuxième ($M_2$) motif de résine définissant une deuxième zone ($Z_2$) de motif, chaque motif de résine (Mi) ayant une surface supérieure courbe, les première et deuxième zones de motif définissant une zone globale (Z) de motifs;
   - Dépôt conforme (203) d'une première couche réfléchissante (302) sur la zone globale de motifs, formant les première couche réfléchissante ($Cr_{1i}$, $Cr_{2i}$) du premier ($F_1$) et deuxième ($F_2$) filtres de couleurs ;
   - Dépôt conforme (204) d'une première couche (303) en matériau diélectrique sur la zone globale de motifs, la première couche en matériau diélectrique (303) ayant une épaisseur égale à l'épaisseur ($h_1$) de la couche en matériau diélectrique ($C_{FP1}$) de cavité de Fabry-Pérot du premier filtre ($F_1$) ;
   - Dépôt (205) d'une couche de résine photosensible (304) sur la zone globale de motifs ;
   - Elimination (207), par photolithographie, de la partie de la couche de résine photosensible (304) recouvrant la deuxième zone ($Z_2$) de motif,
   - Dépôt (208) conforme d'une deuxième couche (306) en matériau diélectrique sur la deuxième zone ($Z_2$) de motif, l'épaisseur totale de la deuxième couche (306) en matériau diélectrique et de la première couche (303) en matériau diélectrique de la deuxième zone ($Z_2$) de motif étant égale à l'épaisseur ($h_2$) de la couche en matériau diélectrique ($C_{FP2}$) du deuxième filtre ($F_2$) de couleur ;
   - Retrait (209) de la couche de résine photosensible, de sorte à libérer en surface la première couche en matériau diélectrique de la première zone de motif formant la couche en matériau diélectrique ($C_{FP1}$) de cavité de Fabry-Pérot du premier filtre ($F_1$) de couleur;
   - Dépôt conforme (210) d'une deuxième couche réfléchissante (307) sur la zone globale (Z) de motifs, formant les couche réfléchissante ($Cr_{1i}$, $Cr_{2i}$) du premier ($F_1$) et deuxième ($F_2$) filtres de couleurs ;

9. Procédé (200b) de fabrication d'une matrice (10) de filtrage multispectral selon l'une quelconque des revendications 1 à 7 **caractérisé en ce que** l'épaisseur ($h_1$) de la couche en matériau diélectrique ($C_{FP1}$) du premier filtre ($F_1$) de couleur est supérieure à l'épaisseur ($h_2$) de la couche en matériau diélectrique ($C_{FP2}$) du deuxième filtre ($F_2$) de couleur et la réalisation du premier ($F_1$) et du deuxième ($F_2$) filtres de couleur comporte les étapes suivantes:

   - Dépôt (201) sur un substrat porteur (300), d'une couche de résine (301);
   - Structuration (202) de la couche de résine (301), pour obtenir un premier ($M_1$) motif de résine définissant une première zone ($Z_1$) de motif et un deuxième ($M_2$) motif de résine définissant une deuxième zone ($Z_2$) de motif, chaque motif de résine (Mi) ayant une surface supérieure courbe, les première et deuxième zones de motif définissant une zone (Z) globale de motifs;
   - Dépôt conforme (203) d'une première couche réfléchissante (302) sur la zone globale de motifs, formant les première couche réfléchissante ($Cr_{1i}$, $Cr_{2i}$) du premier ($F_1$) et deuxième ($F_2$) filtres de couleurs ;

- Dépôt conforme (204) d'une première couche (303) en matériau diélectrique sur la zone globale de motifs, la première couche en matériau diélectrique (303) ayant une épaisseur égale à l'épaisseur ($h_1$) de la couche en matériau diélectrique ($C_{FP1}$) de cavité de Fabry-Pérot du premier filtre ($F_1$) ;
- Dépôt (205) d'une couche de résine photosensible (304) sur la zone globale de motifs (Z);
- Elimination (207), par photolithographie, de la partie de la couche de résine photosensible (304) recouvrant la deuxième zone ($Z_2$) de motif,
- Retrait (208b) d'une épaisseur de la couche en matériau diélectrique de la deuxième zone ($Z_2$) de motif pour obtenir l'épaisseur ($h_2$) de la couche en matériau diélectrique ($C_{FP1}$) du deuxième filtre ($F_2$) ;
- Retrait (209) de la couche de résine photosensible (304), de sorte à libérer en surface la première couche en matériau diélectrique de la première zone ($Z_1$) de motif formant la couche en matériau diélectrique ($C_{FP1}$) de cavité de Fabry-Pérot du premier filtre ($F_1$) de couleur;
- Dépôt conforme (210) d'une deuxième couche réfléchissante (307) sur la zone globale de motifs, formant les première couche réfléchissante ($Cr_{1i}$, $Cr_{2i}$) du premier ($F_1$) et deuxième ($F_2$) filtres de couleurs.

10. Procédé (200c) de fabrication d'une matrice (10) de filtrage multispectral selon l'une quelconque des revendications 1 à 7 **caractérisé en ce que** l'épaisseur ($h_1$) de la couche en matériau diélectrique ($C_{FP1}$) du premier filtre ($F_1$) de couleur est inférieure à l'épaisseur ($h_2$) de la couche en matériau diélectrique ($C_{FP2}$) du deuxième filtre ($F_2$) de couleur et la réalisation du premier et du deuxième filtres de couleur comporte les étapes suivantes :

- Dépôt (201) sur un substrat porteur (300), d'une couche de résine (301);
- Structuration (202) de la couche de résine (301), pour obtenir un premier ($M_1$) motif de résine définissant une première zone de motif et un deuxième ($M_2$) motif de résine définissant une deuxième zone de motif, chaque motif de résine (Mi) ayant une surface supérieure courbe, les première et deuxième zones de motif définissant une zone globale de motifs;
- Dépôt conforme (203) d'une première couche réfléchissante (302) sur la zone globale de motifs, formant les première couche réfléchissante ($Cr_{1i}$, $Cr_{2i}$) du premier ($F_1$) et deuxième ($F_2$) filtres de couleurs ;
- Dépôt (204c) d'une couche en matériau diélectrique (308) sur la zone globale de motifs, ladite couche de matériau diélectrique présentant une surface supérieure plane ;
- Dépôt (205c) d'une deuxième couche de résine (309) sur la zone globale de motifs ;
- Structuration (206c) de la deuxième couche de résine (309), pour obtenir un premier ($M'_1$) et deuxième ($M'_2$) motifs de résine de la deuxième couche de résine (309) respectivement dans la première et deuxième zone de motif, chaque motif de résine ($M'_i$) de la deuxième couche de résine (309) ayant une surface supérieure courbe ;
- Transfert du premier ($M'_1$) et deuxième ($M'_2$) motifs de résine de la deuxième couche de résine (309) dans la couche en matériau diélectrique (308) pour obtenir la couche en matériau diélectrique ($C_{FP1}$) du premier filtre ($F_1$) dans la première zone de motif et la couche en matériau diélectrique ($C_{FP2}$) du deuxième filtre ($F_2$) dans la deuxième zone ($Z_2$) de motif ;
- Dépôt conforme (210) d'une deuxième couche réfléchissante (302) sur la zone globale de motifs, formant les première couche réfléchissante ($Cr_{1i}$, $Cr_{2i}$) du premier ($F_1$) et deuxième ($F_2$) filtres de couleurs .

11. Procédé l'une quelconques des revendications 8 à 10 **caractérisé en ce que** l'étape de structuration (202) de la couche de résine est réalisée par une lithographie Grayscale.

**Patentansprüche**

1. Multispektrale Filtermatrix (10) für eine elektromagnetische Welle, wobei die Matrix mindestens ein erstes ($E_1$) und ein zweites optoelektronisches Element ($E_2$) umfasst, wobei jedes optoelektronische Element ($E_i$) ein Farbfilter ($F_i$) und einen photoelektrischen Wandler ($T_i$) umfasst, der dem Filter ($F_i$) gegenüberliegt, wobei jeder Farbfilter ($F_i$) einen Fabry-Perot-Hohlraum bildet, der eine erste reflektierende Schicht ($Cr_{1i}$), eine zweite reflektierende Schicht ($Cr_{2i}$) und eine Schicht aus dielektrischem Material ($C_{FPi}$) des Fabry-Perot-Hohlraums zwischen der ersten reflektierenden Schicht ($Cr_{1i}$) und der zweiten reflektierenden Schicht ($Cr_{2i}$) umfasst, wobei die Schicht aus dielektrischem Material ($C_{FPi}$) umfasst:

- eine untere Oberfläche ($S_{inf\_i}$), die mit der ersten reflektierenden Schicht ($Cr_{1i}$) in Kontakt steht, wobei die untere Oberfläche ($S_{inf\_i}$) gekrümmt ist;
- eine obere Oberfläche ($S_{sup\_i}$), die mit der zweiten reflektierenden Schicht ($Cr_{1i}$) in Kontakt steht, wobei die obere Oberfläche ($S_{sup\_i}$) gekrümmt ist;

wobei die Dicken der beiden Schichten aus dielektrischem Material der beiden Farbfilter unterschiedlich sind.

2. Multispektrale Filtermatrix (10) nach dem vorhergehenden Anspruch, **dadurch gekennzeichnet, dass** für jeden Farbfilter ($F_i$):

- Die erste reflektierende Schicht ($Cr_{1i}$) eine gekrümmte untere Oberfläche ($S1_{inf\_i}$) und eine gekrümmte obere Oberfläche ($S1_{sup\_i}$) mit demselben Krümmungsradius hat, wobei die obere Oberfläche der ersten reflektierenden Schicht ($S1_{sup\_i}$) die untere Oberfläche ($S_{inf\_i}$) der Schicht aus dielektrischem Material ($C_{FPi}$) berührt;
- Die zweite reflektierende Schicht ($Cr_{2i}$) eine gekrümmte untere Oberfläche ($S2_{inf\_i}$) und eine gekrümmte obere Oberfläche ($S2_{sup\_i}$) mit demselben Krümmungsradius hat, wobei die untere Oberfläche ($S2_{inf\_i}$) der zweiten reflektierenden Schicht mit der oberen Oberfläche ($S_{sup\_i}$) der Schicht aus dielektrischem Material ($C_{FPi}$) in Kontakt ist.

3. Multispektrale Filtermatrix (10) nach einem der vorhergehenden Ansprüche, **dadurch gekennzeichnet, dass** die Krümmungsradien der unteren Oberfläche ($S_{inf\_i}$) und der oberen Oberfläche ($S_{sup\_i}$) der Schicht aus dielektrischem Material ($C_{FPI}$) jedes Farbfilters ($F_i$) strikt größer als 300 nm sind.

4. Matrix (10) nach einem der vorhergehenden Ansprüche, **dadurch gekennzeichnet, dass** für jeden Farbfilter ($F_i$) die Krümmungen der unteren Oberfläche ($S_{inf\_i}$) und der oberen Oberfläche ($S_{sup\_i}$) der Schicht aus dielektrischem Material ($C_{FPi}$) jedes Farbfilters ($F_i$) entweder beide konvex oder beide konkav sind.

5. Matrix (10) nach einem der vorhergehenden Ansprüche, **dadurch gekennzeichnet, dass** das gekrümmte Profil der unteren Oberfläche ($S_{sup\_i}$) der Schicht aus dielektrischem Material ($C_{FPi}$) von mindestens einem Farbfilter ($F_i$) aus dem ersten ($F_1$) und dem zweiten ($F_2$) Farbfilter durch die folgende Gleichung definiert ist:

$$y = R_y * \left(1 - \left|\frac{x}{f * Sx}\right|^m\right)^{\frac{1}{n}} + \mathrm{h_{Cri1}}$$

und dass das gekrümmte Profil der oberen Oberfläche ($S_{inf0}$) der Schicht durch die folgende Gleichung definiert ist:

$$y = R_y * \left(1 - \left|\frac{x}{f * Sx}\right|^m\right)^{\frac{1}{n}} + \mathrm{hi} + \mathrm{h_{Cri1}}$$

In einem Koordinatensystem (O,X,Y,Z) im Raum, wobei O der Ursprung der unteren Oberfläche der ersten reflektierenden Schicht ($S1_{inf\_i}$) des Filters $F_i$ ist, mit:

- hi der Dicke der Schicht aus dielektrischem Material ($C_{FPi}$) des Filters (Fi),
- $h_{Cri1}$ der Dicke, entlang der Y-Achse, der ersten reflektierenden Schicht ($C_{r1i}$) des Filters ($F_i$),
- $R_y$ dem Krümmungsradius der unteren Oberfläche ($S_{inf\_i}$) und der oberen Oberfläche ($S_{sup\_i}$) der Schicht aus dielektrischem Material ($C_{FPi}$) entlang der Y-Achse für x=0,
- m und n jeweils einer natürlichen Zahl und einer natürlichen Zahl ungleich Null,
- Mit f*Sx dem Krümmungsradius der unteren Oberfläche ($S_{inf\_i}$) und der oberen Oberfläche ($S_{sup\_i}$) entlang der X-Achse, wobei Sx die Größe entlang der X-Achse des photoelektrischen Wandlers (Ti) gegenüber dem Filter (Fi) und f eine Konstante ist.

6. Matrix (10) nach einem der Ansprüche 1 bis 4, **dadurch gekennzeichnet, dass** das gekrümmte Profil der unteren Oberfläche ($S_{sup\_i}$) der Schicht aus dielektrischem Material ($C_{FPI}$) von mindestens einem Farbfilter ($F_i$) aus dem ersten ($F_1$) und dem zweiten ($F_2$) Farbfilter durch die folgende Gleichung definiert ist:

$$z = R_z * \left(1 - \left|\frac{x}{f * Sx}\right|^m - \left|\frac{y}{f * Sy}\right|^n\right)^{\frac{1}{k}} + \mathrm{h_{Cri1}}$$

und dass das gekrümmte Profil der oberen Oberfläche ($S_{inf\_i}$) der Schicht durch die folgende Gleichung definiert ist:

$$z = R_z * \left(1 - \left|\frac{x}{f*Sx}\right|^m - \left|\frac{y}{f*Sy}\right|^n\right)^{\frac{1}{k}} + hi + h_{Cri1}$$

In einem Koordinatensystem (O,X,Y,Z) im Raum, wobei O der Ursprung der unteren Oberfläche der ersten reflektierenden Schicht ($S1_{inf\_i}$) des Filters Fi ist;
Mit:

- hi der Dicke der Schicht aus dielektrischem Material ($C_{FPi}$) des Filters (Fi),
- $h_{Cri1}$ der Dicke, entlang der Y-Achse, der ersten reflektierenden Schicht ($C_{r1i}$) des Filters (Fi),
- $R_z$ dem Krümmungsradius der unteren Oberfläche ($S_{inf\_i}$) und der oberen Oberfläche ($S_{sup\_i}$) der Schicht aus dielektrischem Material ($C_{FPi}$) entlang der Z-Achse,
- m und n jeweils einer natürlichen Zahl und einer natürlichen Zahl ungleich Null,
- Mit f*Sx dem Krümmungsradius der unteren Oberfläche ($S_{inf\_i}$) und der oberen Oberfläche ($S_{sup\_i}$) der Schicht aus dielektrischem Material ($C_{FPi}$) entlang der X-Achse, wobei Sx die Größe entlang der X-Achse des photoelektrischen Wandlers (Ti) gegenüber dem Filter (Fi) und f eine Konstante ist,
- Mit f*Sy dem Krümmungsradius der unteren Oberfläche ($S_{inf\_i}$) und der oberen Oberfläche ($S_{sup\_i}$) der Schicht aus dielektrischem Material ($C_{FPi}$) entlang der Y-Achse, wobei Sy die Größe entlang der Y-Achse des photoelektrischen Wandlers (Ti) gegenüber dem Filter (Fi) ist.

7. Matrix (10) nach einem der vorhergehenden Ansprüche, **dadurch gekennzeichnet, dass** für jeden Farbfilter ($F_i$) die Krümmungen der unteren Oberfläche ($S_{inf\_i}$) und der oberen Oberfläche ($S_{sup\_i}$) der Schicht aus dielektrischem Material ($C_{FPi}$) beide konvex sind, wobei die Krümmung der oberen Oberfläche ($S_{sup\_i}$) und der unteren Oberfläche ($S_{inf\_i}$) der Schicht aus dielektrischem Material ($C_{FPi}$) so gewählt ist, dass die elektromagnetische Welle auf den Wandler ($T_i$) gegenüber dem Filter ($F_i$) fokussiert wird.

8. Verfahren (200a) zur Herstellung einer multispektralen Filtermatrix (10) nach einem der vorhergehenden Ansprüche, **dadurch gekennzeichnet, dass** die Dicke ($h_1$) der Schicht aus dielektrischem Material ($C_{FP1}$) des ersten Farbfilters ($F_1$) kleiner ist als die Dicke ($h_2$) der Schicht aus dielektrischem Material ($C_{FP2}$) des zweiten Farbfilters ($F_2$) und die Herstellung des ersten ($F_1$) und des zweiten ($F_2$) Farbfilters die folgenden Schritte umfasst:

- Auftragen (201) einer Harzschicht (301) auf einem Trägersubstrat (300);
- Strukturieren (202) der Harzschicht (301), um ein erstes ($M_1$) Harzmuster, das einen ersten Musterbereich ($Z_1$) definiert, und ein zweites ($M_2$) Harzmuster, das einen zweiten Musterbereich ($Z_2$) definiert, zu erhalten, wobei jedes Harzmuster (Mi) eine gekrümmte obere Oberfläche aufweist und der erste und der zweite Musterbereich einen Gesamtmusterbereich (Z) definieren;
- Konformes Auftragen (203) einer ersten reflektierenden Schicht (302) auf dem Gesamtmusterbereich, die die erste reflektierende Schicht ($C_{r1i}$, $Cr_{2i}$) des ersten ($F_1$) und zweiten ($F_2$) Farbfilters bildet;
- Konformes Auftragen (204) einer ersten Schicht (303) aus dielektrischem Material auf dem Gesamtmusterbereich, wobei die erste Schicht aus dielektrischem Material (303) eine Dicke aufweist, die gleich der Dicke ($h_1$) der Schicht aus dielektrischem Material ($C_{FPi}$) des Fabry-Pérot-Hohlraums des ersten Filters ($F_1$) ist;
- Auftragen (205) einer lichtempfindlichen Harzschicht (304) auf den Gesamtmusterbereich;
- Entfernen (207) durch Fotolithografie des Teils der lichtempfindlichen Harzschicht (304), der den zweiten Musterbereich ($Z_2$) bedeckt,
- Konformes Auftragen (208) einer zweiten Schicht (306) aus dielektrischem Material auf dem zweiten Musterbereich ($Z_2$), wobei die Gesamtdicke der zweiten Schicht (306) aus dielektrischem Material und der ersten Schicht (303) aus dielektrischem Material des zweiten Musterbereichs ($Z_2$) gleich der Dicke ($h_2$) der Schicht aus dielektrischem Material ($C_{FP2}$) des zweiten Farbfilters ($F_2$) ist;
- Entfernen (209) der lichtempfindlichen Harzschicht, so dass die erste Schicht aus dielektrischem Material des ersten Musterbereichs, der die Schicht aus dielektrischem Material ($C_{FP1}$) des Fabry-Pérot-Hohlraums des ersten Farbfilters ($F_1$) bildet, an der Oberfläche freigesetzt wird;
- Konformes Auftragen (210) einer zweiten reflektierenden Schicht (307) auf dem Gesamtmusterbereich (Z), die die reflektierenden Schichten ($Cr_{1i}$, $Cr_{2i}$) des ersten ($F_1$) und zweiten ($F_2$) Farbfilters bildet;

9. Verfahren (200b) zur Herstellung einer multispektralen Filtermatrix (10) nach einem der Ansprüche 1 bis 7, **dadurch gekennzeichnet, dass** die Dicke ($h_1$) der Schicht aus dielektrischem Material ($C_{FPi}$) des ersten Farbfilters ($F_1$) größer ist als die Dicke ($h_2$) der Schicht aus dielektrischem Material ($C_{FP2}$) des zweiten Farbfilters ($F_2$) und die Herstellung

des ersten (F$_1$) und des zweiten (F$_2$) Farbfilters die folgenden Schritte umfasst:

- Auftragen (201) einer Harzschicht (301) auf einem Trägersubstrat (300);
- Strukturieren (202) der Harzschicht (301), um ein erstes Harzmuster (M$_1$), das einen ersten Musterbereich (Z$_1$) definiert, und ein zweites Harzmuster (M$_2$), das einen zweiten Musterbereich (Z$_2$) definiert, zu erhalten, wobei jedes Harzmuster (Mi) eine gekrümmte obere Oberfläche aufweist und der erste und der zweite Musterbereich einen Gesamtmusterbereich (Z) definieren;
- Konformes Auftragen (203) einer ersten reflektierenden Schicht (302) auf dem Gesamtmusterbereich, die die erste reflektierende Schicht (Cr$_{1i}$, Cr$_{2i}$) des ersten (F$_1$) und zweiten (F$_2$) Farbfilters bildet;
- Konformes Auftragen (204) einer ersten Schicht (303) aus dielektrischem Material auf dem Gesamtmusterbereich, wobei die erste Schicht aus dielektrischem Material (303) eine Dicke aufweist, die gleich der Dicke (h$_1$) der Schicht aus dielektrischem Material (C$_{FP1}$) des Fabry-Pérot-Hohlraums des ersten Filters (F$_1$) ist;
- Auftragen (205) einer lichtempfindlichen Harzschicht (304) auf den Gesamtmusterbereich (Z);
- Entfernen (207) durch Fotolithografie des Teils der lichtempfindlichen Harzschicht (304), der den zweiten Musterbereich (Z$_2$) bedeckt,
- Entfernen (208b) einer Dicke der Schicht aus dielektrischem Material des zweiten Musterbereichs (Z$_2$), um die Dicke (h$_2$) der Schicht aus dielektrischem Material (C$_{FP1}$) des zweiten Filters (F$_2$) zu erhalten;
- Entfernen (209) der lichtempfindlichen Harzschicht (304), so dass die erste Schicht aus dielektrischem Material des ersten Musterbereichs (Z$_1$), der die Schicht aus dielektrischem Material (C$_{FP1}$) des Fabry-Pérot-Hohlraums des ersten Farbfilters (F$_1$) bildet, an der Oberfläche freigesetzt wird;
- Konformes Auftragen (210) einer zweiten reflektierenden Schicht (307) auf dem Gesamtmusterbereich, die die erste reflektierende Schicht (Cr$_{1i}$, Cr$_{2i}$) des ersten (F$_1$) und zweiten (F$_2$) Farbfilters bildet.

10. Verfahren (200c) zur Herstellung einer multispektralen Filtermatrix (10) nach einem der Ansprüche 1 bis 7, **dadurch gekennzeichnet, dass** die Dicke (h$_1$) der Schicht aus dielektrischem Material (C$_{FP1}$) des ersten Farbfilters (F$_1$) geringer ist als die Dicke (h$_2$) der Schicht aus dielektrischem Material (C$_{FP2}$) des zweiten Farbfilters (F$_2$) und die Herstellung des ersten und des zweiten Farbfilters die folgenden Schritte umfasst:

- Auftragen (201) einer Harzschicht (301) auf einem Trägersubstrat (300);
- Strukturieren (202) der Harzschicht (301), um ein erstes Harzmuster (M$_1$), das einen ersten Musterbereich definiert, und ein zweites Harzmuster (M$_2$), das einen zweiten Musterbereich definiert, zu erhalten, wobei jedes Harzmuster (Mi) eine gekrümmte obere Oberfläche aufweist und der erste und der zweite Musterbereich einen Gesamtmusterbereich definieren;
- Konformes Auftragen (203) einer ersten reflektierenden Schicht (302) auf dem Gesamtmusterbereich, die die erste reflektierende Schicht (Cr$_{1i}$, Cr$_{2i}$) des ersten (F$_1$) und zweiten (F$_2$) Farbfilters bildet;
- Auftragen (204c) einer Schicht aus dielektrischem Material (308) auf den Gesamtmusterbereich, wobei die Schicht aus dielektrischem Material eine ebene obere Oberfläche aufweist;
- Auftragen (205c) einer zweiten Harzschicht (309) auf den Gesamtmusterbereich;
- Strukturieren (206c) der zweiten Harzschicht (309), um ein erstes (M'$_1$) und ein zweites (M'$_2$) Harzmuster der zweiten Harzschicht (309) jeweils im ersten und zweiten Musterbereich zu erhalten, wobei jedes Harzmuster (M'$_i$) der zweiten Harzschicht (309) eine gekrümmte obere Oberfläche aufweist;
- Übertragen des ersten (M'$_1$) und zweiten (M'$_2$) Harzmusters von der zweiten Harzschicht (309) in die Schicht aus dielektrischem Material (308), um die Schicht aus dielektrischem Material (C$_{FP1}$) des ersten Filters (F$_1$) im ersten Musterbereich und die Schicht aus dielektrischem Material (C$_{FP2}$) des zweiten Filters (F$_2$) im zweiten Musterbereich (Z$_2$) zu erhalten;
- Konformes Auftragen (210) einer zweiten reflektierenden Schicht (302) auf dem Gesamtmusterbereich, die die erste reflektierende Schicht (Cr$_{1i}$, Cr$_{2i}$) des ersten (F$_1$) und zweiten (F$_2$) Farbfilters bildet.

11. Verfahren nach einem der Ansprüche 8 bis 10, **dadurch gekennzeichnet, dass** der Schritt des Strukturierens (202) der Harzschicht durch eine Graustufenlithografie durchgeführt wird.

**Claims**

1. A multispectral filtering matrix (10) for an electromagnetic wave, the matrix including at least a first (E$_1$) and a second (E$_2$) optoelectronic element, each optoelectronic element (E$_i$) comprising a colour filter (F$_i$) and a photoelectric transducer (T$_i$) facing said filter (F$_i$), each colour filter (F$_i$) forming a Fabry-Perot cavity including a first reflective layer (C$_{r1i}$), a second reflective layer (Cr$_{2i}$) and a Fabry-Perot cavity layer of dielectric material (C$_{FPi}$) between the first

reflective layer ($Cr_{1i}$) and the second reflective layer ($C_{r2i}$), the layer of dielectric material ($C_{FPi}$) including :

- a lower surface ($S_{inf\_i}$), in contact with the first reflective layer (Cr1i); the lower surface ($S_{inf\_i}$) being curved;
- an upper surface ($S_{sup\_i}$) in contact with the second reflective layer ($C_{r1i}$), the upper surface ($S_{sup\_i}$) being curved;

the thicknesses of the two layers of dielectric material of the two colour filters being different.

2. The multispectral filtering matrix (10) according to the preceding claim, **characterised in that**, for each colour filter ($F_i$):

- The first reflective layer ($Cr_{1i}$) has a curved lower surface ($S_{1inf\_i}$), and a curved upper surface ($S_{1sup\_i}$), having the same radius of curvature, the upper surface of the first reflective layer ($S_{1sup\_i}$) being in contact with the lower surface ($S_{inf\_i}$) of the layer of dielectric material ($C_{FPi}$);
- The second reflective layer ($Cr_{2i}$) has a curved lower surface ($S2_{inf\_i}$) and a curved upper surface ($S_{2sup\_i}$) with the same radius of curvature, the lower surface ($S2_{inf\_i}$) of the second reflective layer being in contact with the upper surface ($S_{sup\_i}$) of the layer of dielectric material ($C_{FPi}$).

3. The multispectral filtering matrix (10) according to any of the preceding claims, **characterised in that** the radii of curvature of the lower surface ($S_{inf\_i}$) and of the upper surface ($S_{sup\_i}$) of the layer of dielectric material ($C_{FPi}$) of each colour filter ($F_i$) are strictly greater than 300 nm.

4. The matrix (10) according to any of the preceding claims, **characterised in that**, for each colour filter ($F_i$), the curvatures of the lower surface ($S_{inf\_i}$) and of the upper surface ($S_{sup\_i}$) of the layer of dielectric material ($C_{FPi}$) of each colour filter ($F_i$) are both convex or both concave.

5. The matrix (10) according to any of the preceding claims, **characterised in that** the curved profile of the lower surface ($S_{sup\_i}$) of the layer of dielectric material ($C_{FPi}$) of at least one colour filter ($F_i$) of the first ($F_1$) and second ($F_2$) colour filters is defined by the following equation:

$$y = R_y * \left(1 - \left|\frac{x}{f * Sx}\right|^m\right)^{\frac{1}{n}} + h_{Cri1}$$

and **in that** the curved profile of the upper surface ($S_{inf\_i}$) of said layer is defined by the following equation:

$$y = R_y * \left(1 - \left|\frac{x}{f * Sx}\right|^m\right)^{\frac{1}{n}} + hi + h_{Cri1}$$

In a (O,X,Y,Z) reference frame in space, with O being the origin of the lower surface of the first reflective layer ($S1_{inf\_i}$) of the filter $F_i$; With:

- hi the thickness of the layer of dielectric material ($C_{FPi}$) of said filter ($F_i$),
- $h_{Cri1}$ the thickness, along the axis Y, of the first reflective layer ($Cr_{1i}$) of the filter ($F_i$),
- $R_y$ is the radius of curvature of the lower surface ($S_{inf\_i}$) and the upper surface ($S_{sup\_i}$) of the layer of dielectric material ($C_{FPi}$) along the axis Y for x=0,
- m and n respectively a natural number and a non-zero natural number,
- with f*Sx the radius of curvature of the lower surface ($S_{inf\_i}$) and of the upper surface ($S_{sup\_i}$) along the axis X, $S_x$ being the size, along the axis X, of the photoelectric transducer ($T_i$) facing the filter ($F_i$) and f is a constant.

6. The matrix (10) according to any of claims 1 to 4, **characterised in that** the curved profile of the lower surface ($S_{sup\_i}$) of the layer of dielectric material ($C_{FPi}$) of at least one colour filter (Fi) from among the first ($F_1$) and second ($F_2$) colour filters is defined by the following equation:

$$z = R_z * \left(1 - \left|\frac{x}{f * Sx}\right|^m - \left|\frac{y}{f * Sy}\right|^n\right)^{\frac{1}{k}} + h_{Cri1}$$

and **in that** the curved profile of the upper surface ($S_{inf\_i}$) of said layer is defined by the following equation:

$$z = R_z * \left(1 - \left|\frac{x}{f * Sx}\right|^m - \left|\frac{y}{f * Sy}\right|^n\right)^{\frac{1}{k}} + hi + h_{Cri1}$$

In a (O,X,Y,Z) reference frame in space, with O being the origin of the lower surface of the first reflective layer ($S_{1inf\_i}$) of the filter $F_i$;
with:

- hi the thickness of the layer of dielectric material ($C_{FPi}$) of said filter ($F_i$),
- $h_{Cri1}$ the thickness, along the axis Y, of the first reflective layer ($Cr_{1i}$) of the filter ($F_i$),
- Rz is the radius of curvature of the lower surface ($S_{inf\_i}$) and of the upper surface ($S_{sup\_i}$) of the layer of dielectric material ($C_{FPi}$) along the axis Z,
- m and n respectively a natural number and a non-zero natural number,
- with f*Sx the radius of curvature of the lower surface ($S_{inf\_i}$) and the upper surface ($S_{sup\_i}$) of the layer of dielectric material ($C_{FPi}$) along the axis X, $S_x$ being the size, along the axis X, of the photoelectric transducer ($T_i$) facing the filter (Fi) and f is a constant,
- with f*Sy the radius of curvature of the lower surface ($S_{inf\_i}$) and the upper surface ($S_{sup\_i}$) of the layer of dielectric material ($C_{FPi}$) along the axis Y, Sy being the size, along the axis Y, of the photoelectric transducer ($T_i$) facing the filter ($F_i$).

7. The matrix (10) according to one of the preceding claims, **characterised in that**, for each colour filter (Fi), the curvatures of the lower surface ($S_{inf\_i}$) and of the upper surface ($S_{sup\_i}$) of the layer of dielectric material ($C_{FPi}$) are both convex, the curvature of the upper surface ($S_{sup\_i}$) and the lower surface ($S_{inf\_i}$) of the layer of dielectric material ($C_{FPi}$) being chosen so as to focus the electromagnetic wave on the transducer ($T_i$) facing said filter ($F_i$).

8. A method (200a) for manufacturing a multispectral filtering matrix (10) according to any of the preceding claims, **characterised in that** the thickness ($h_1$) of the layer of dielectric material ($C_{FP1}$) of the first colour filter ($F_1$) is less than the thickness ($h_2$) of the layer of dielectric material ($C_{FP2}$) of the second colour filter ($F_2$), and making the first ($F_1$) and second ($F_2$) colour filters includes the following steps of:

- Depositing (201) a resin layer (301) onto a carrier substrate (300);
- Structuring (202) the resin layer (301) to obtain a first resin pattern ($M_1$) defining a first pattern zone ($Z_1$) and a second resin pattern ($M_2$) defining a second pattern zone ($Z_2$), each resin pattern ($M_i$) having a curved upper surface, the first and second pattern zones defining an overall pattern zone (Z);
- Conformally depositing (203) a first reflective layer (302) onto the overall pattern zone, forming the first reflective layer ($C_{r1i}$, $C_{r2i}$) of the first ($F_1$) and second ($F_2$) colour filters;
- Conformally depositing (204) a first layer (303) of dielectric material onto the overall pattern zone, the first layer of dielectric material (303) having a thickness equal to the thickness ($h_1$) of the Fabry-Perot cavity layer of dielectric material ($C_{FP1}$) of the first filter ($F_1$);
- Depositing (205) a photosensitive resin layer (304) onto the overall pattern zone;
- Removing (207), by photolithography, the part of the photosensitive resin layer (304) covering the second pattern zone ($Z_2$),
- Conformally depositing (208) a second layer (306) of dielectric material onto the second pattern zone ($Z_2$), the total thickness of the second layer (306) of dielectric material and of the first layer (303) of dielectric material of the second pattern zone ($Z_2$) being equal to the thickness ($h_2$) of the layer of dielectric material ($C_{FP2}$) of the second colour filter ($F_2$);
- Removing (209) the photosensitive resin layer, so as to release the first layer of dielectric material of the first pattern zone forming the Fabry-Perot cavity layer of dielectric material ($C_{FP1}$) of the first colour filter ($F_1$) at the surface;
- Conformally depositing (210) a second reflective layer (307) onto the overall pattern zone (Z), forming the reflective layers ($C_{r1i}$, $C_{r2i}$) of the first ($F_1$) and second ($F_2$) colour filters.

9. A method (200b) for manufacturing a multispectral filtering matrix (10) according to any one of claims 1 to 7, **characterised in that** the thickness ($h_1$) of the layer of dielectric material ($C_{FP1}$) of the first colour filter ($F_1$) is greater than the thickness ($h_2$) of the layer of dielectric material ($C_{FP2}$) of the second colour filter ($F_2$), and making the first ($F_1$) and second ($F_2$) colour filters includes the following steps of:

- Depositing (201) a resin layer (301) onto a carrier substrate (300);
- Structuring (202) the resin layer (301) to obtain a first resin pattern ($M_1$) defining a first pattern zone ($Z_1$) and a second resin pattern ($M_2$) defining a second pattern zone ($Z_2$), each resin pattern ($M_i$) having a curved upper surface, the first and second pattern zones defining an overall pattern zone (Z);
- Conformally depositing (203) a first reflective layer (302) onto the overall pattern zone, forming the first reflective layer ($C_{r1i}$, $C_{r2i}$) of the first ($F_1$) and second ($F_2$) colour filters;
- Conformally depositing (204) a first layer (303) of dielectric material onto the overall pattern zone, the first layer of dielectric material (303) having a thickness equal to the thickness ($h_1$) of the Fabry-Perot cavity layer of dielectric material ($C_{FP1}$) of the first filter ($F_1$);
- Depositing (205) a photosensitive resin layer (304) onto the overall pattern zone (Z);
- Removing (207), by photolithography, the part of the photosensitive resin layer (304) covering the second pattern zone ($Z_2$),
- Removing (208b) a thickness of the layer of dielectric material of the second pattern zone ($Z_2$) to obtain the thickness ($h_2$) of the layer of dielectric material ($C_{FP1}$) of the second filter ($F_2$);
- Removing (209) the photosensitive resin layer (304), so as to release the first layer of dielectric material of the first pattern zone ($Z_1$) forming the Fabry-Perot cavity layer of dielectric material ($C_{FP1}$) of the first colour filter ($F_1$) at the surface;
- Conformally depositing (210) a second reflective layer (307) onto the overall pattern zone forming the first reflective layer ($C_{r1i}$, $C_{r2i}$) of the first ($F_1$) and second ($F_2$) colour filters.

10. A method (200c) for manufacturing a multispectral filtering matrix (10) according to any one of claims 1 to 7, **characterised in that** the thickness ($h_1$) of the layer of dielectric material ($C_{FP1}$) of the first colour filter ($F_1$) is less than the thickness ($h_2$) of the layer of dielectric material ($C_{FP2}$) of the second colour filter ($F_2$), and making the first and second colour filters includes the following steps of:

- Depositing (201) a resin layer (301) onto a carrier substrate (300);
- Structuring (202) the resin layer (301), to obtain a first resin pattern ($M_1$) defining a first pattern zone and a second resin pattern ($M_2$) defining a second pattern zone, each resin pattern ($M_i$) having a curved upper surface, the first and second pattern zones defining an overall pattern zone;
- Conformally depositing (203) a first reflective layer (302) onto the overall pattern zone, forming the first reflective layer ($C_{r1i}$, $C_{r2i}$) of the first ($F_1$) and second ($F_2$) colour filters;
- Depositing (204c) a layer of dielectric material (308) onto the overall pattern zone, said layer of dielectric material having a planar upper surface;
- Depositing (205c) a second resin layer (309) onto the overall pattern zone;
- Structuring (206c) the second resin layer (309), to obtain a first ($M'_1$) and second ($M'2$) resin pattern of the second resin layer (309) in the first and second pattern zone, respectively, each resin pattern ($M'_i$) of the second resin layer (309) having a curved upper surface;
- Transferring the first ($M'_1$) and second ($M'_2$) resin patterns of the second resin layer (309) into the layer of dielectric material (308) to obtain the layer of dielectric material ($C_{FP1}$) of the first filter ($F_1$) in the first pattern zone and the layer of dielectric material ($C_{FP2}$) of the second filter ($F_2$) in the second pattern zone ($Z_2$);
- Conformally depositing (210) a second reflective layer (302) onto the overall pattern zone, forming the first reflective layer ($C_{r1i}$, $C_{r2i}$) of the first ($F_1$) and second ($F_2$) colour filters.

11. The method of any one of claims 8 to 10, **characterised in that** the step of structuring (202) the resin layer is performed by Grayscale lithography.

**Fig. 1**

**Fig. 2**

**Fig. 3a**

**Fig. 3b**

**Fig. 4**

**Fig. 5**

201

**Fig. 6**

301

300

202

M₁    M₂

**Fig. 7**

301

300

Z₁    Z₂

Z

203

M₁    M₂

**Fig. 8**

302

301

300

Z₁    Z₂

Z

Fig. 9

Fig. 10

Fig. 11

**Fig. 12**

207

305
303
302
301
300

Z₁  Z₂
Z

**Fig. 13**

208

305
306
303
302
301
300

Z₁  Z₂
Z

**Fig. 14**

209

306
303
302
301
300

Z₁  Z₂
Z

**Fig. 15**

210

307

302

301

300

$Z_1$   $Z_2$

$Z$

**Fig. 16**

200b

201

202

203

204

205

206

207

208b

209

210

**Fig. 17**

**Fig. 18**

Fig. 19

204c

308
302
301
300

$Z_1$ $Z_2$

$Z$

Fig. 20

205c

309
308
302
301
300

$Z_1$ $Z_2$

**Fig. 21**

**Fig. 22**

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- US 6031653 A
- US 4466699 A
- US 20110043823 A1

**Littérature non-brevet citée dans la description**

- **SHRESTHA, V.** ; **LEE, SS.** ; **KIM, ES**. Non-iridescent Transmissive Structural Color Filter Featuring Highly Efficient Transmission and High Excitation Purity. *Sci Rep*, 2014, vol. 4, 4921